# FASCICULE DE BREVET EUROPEEN

(11) **EP 2 898 715 B1**
(45) Date de publication et mention de la délivrance du brevet: **15.08.2018**
(21) Numéro de dépôt: 13770959.8
(22) Date de dépôt: 10.09.2013
(51) Int. Cl.: H04W 12/06, H04L 29/06, H04W 12/12

(54) **PROCEDES DE VERIFICATION ET DE CONTROLE DANS UN COEUR DE RESEAU IP MULTIMEDIA, ET SERVEURS**
VERIFIZIERUNGS- UND PRÜFVERFAHREN ZUR VERWENDUNG IN EINEM MULTIMEDIA-IP-NETZWERKKERN UND SERVER
VERIFICATION AND CHECKING METHODS FOR USE IN A MULTIMEDIA IP NETWORK CORE, AND SERVERS

(30) Priorité: 24.09.2012 FR 1258931
(43) Date de publication de la demande: 29.07.2015
(73) Titulaire: Orange, 75015 Paris (FR)
(72) Inventeur: LE ROUZIC, Jean-Claude, F-22560 Trebeurden (FR); DOREE, José, F-22300 Lannion (FR)
(74) Mandataire: Fontenelle, Sandrine
(86) Numéro de dépôt international: PCT/FR2013/052075
(87) Numéro de publication internationale: WO 2014/044951

(56) Documents cités:
- US-A1- 2007 055 874
- US-A1- 2012 036 270
- "3rd Generation Partnership Project; Technical Specification Group Services and System Aspects; 3G security; Access security for IP-based services (Release 11)", 3GPP STANDARD; 3GPP TS 33.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V11.1.0, 16 mars 2012 (2012-03-16), pages 1-114, XP050580308,

## Description

### Arrière-plan de l'invention

L'invention se rapporte au domaine général des télécommunications.

Elle concerne plus particulièrement la gestion de l'enregistrement des utilisateurs dans un coeur de réseau IP (Internet Protocol) multimédia, tel que par exemple un coeur de réseau utilisant une technologie de voix sur IP (ou VoIP pour Voice over IP) et implémentant une architecture IMS (IP Multimedia Subsystem), telle que définie par le standard de normalisation 3GPP (Third Generation Partnership Project).

De façon connue, les coeurs de réseau de voix sur IP sont exposés au monde de l'Internet et à ses désagréments, notamment en termes d'attaques et de tentatives d'usurpation d'identités propres aux réseaux IP. Les acteurs des standards (et notamment les opérateurs téléphoniques) participant à la définition de ces nouveaux réseaux de télécommunications, ont donc pour souci de proposer des procédures de sécurité irréprochables afin d'éviter aux utilisateurs des déconvenues résultant de vols d'identités.

Pour les coeurs de réseau IMS, il est prévu de mettre en oeuvre de telles procédures notamment lors de l'enregistrement des utilisateurs (ou de façon équivalente, de leurs terminaux) auprès du coeur de réseau. L'enregistrement d'un utilisateur auprès d'un coeur de réseau IMS est spécifié dans les documents 3GPP TS 23.228 et TS 24.229.

De façon notoire, un abonné se fait connaître auprès d'un coeur de réseau IMS au travers d'une souscription, au cours de laquelle sont déclarées plusieurs identités de l'utilisateur, à savoir :
- son identité publique (ex. numéro de téléphone, nom de contact, adresse SIP URI (Session Initiation Protocol Uniform Request Identifier)) ou IMPU (IP Multimedia Public User identity), à laquelle sont rattachées les informations des services auxquels l'utilisateur a droit (autrement dit son profil de services) ; et
- son identité privée ou IMPI (IP Multimedia Private user Identity), habituellement engendrée par l'opérateur du coeur de réseau IMS de manière aléatoire, au format « NAI » (Network Access Identifier) défini dans le document RFC 4282 édité par l'IETF (Internet Engineering Task Force), et à laquelle sont rattachées les informations d'authentification de l'utilisateur (ex. un mot de passe).

Ces identités publique et privée sont stockées au niveau d'un serveur de données d'utilisateurs (ou d'abonnés) du coeur de réseau aussi connu sous l'appellation serveur HSS (Home Subscriber Server). Elles sont toutes les deux nécessaires à l'utilisateur pour s'enregistrer auprès du coeur de réseau IMS.

Dans l'état actuel de la norme, le standard 3GPP prévoit plusieurs procédures d'authentification pouvant être appliquées lors de l'enregistrement d'un utilisateur auprès d'un coeur de réseau IMS. L'une de ces procédures est la méthode SIP Digest, couramment mise en oeuvre par les industriels et notamment les opérateurs des coeurs de réseau.

Par souci de simplification dans la suite de la description, on utilisera de façon équivalente les expressions « enregistrement d'un terminal d'un utilisateur auprès d'un coeur de réseau IMS » et « enregistrement d'un utilisateur auprès d'un coeur de réseau IMS ».

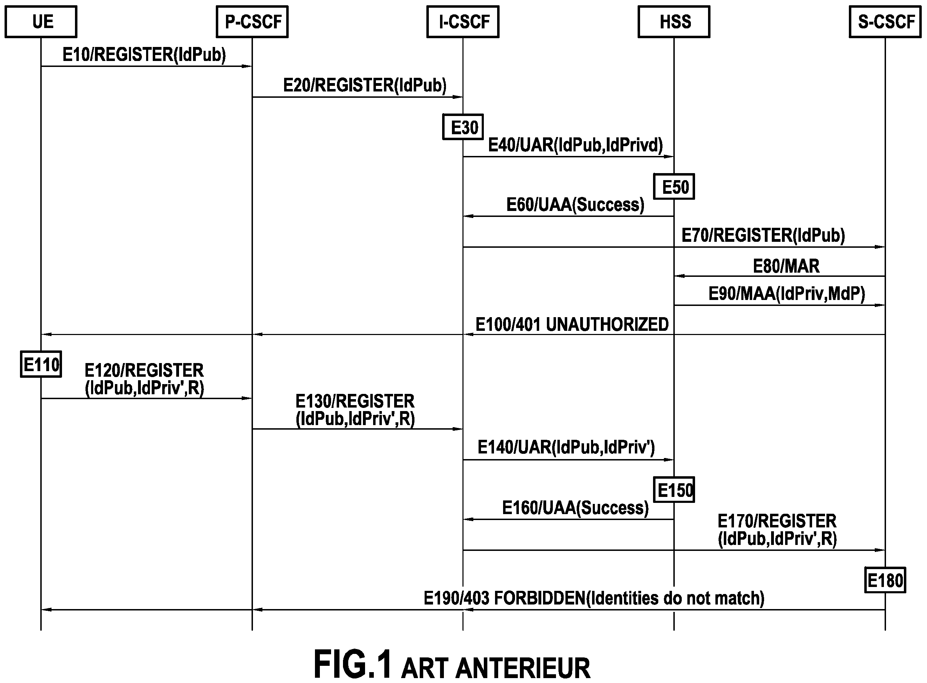

La **figure 1** illustre les principales étapes mises en oeuvre, dans un exemple connu de l'état de la technique, lors d'un enregistrement d'un utilisateur, au cours d'une procédure d'authentification utilisant la méthode SIP Digest. Cet exemple de l'état de la technique résulte d'un aménagement, par les industriels des coeurs de réseau IMS, des spécifications du standard 3GPP pour permettre l'utilisation de la méthode SIP Digest lors de l'enregistrement de l'utilisateur.

Les principales entités impliquées lors de cette procédure sont d'une part, le terminal UE (User Equipment) de l'utilisateur, et d'autre part, côté coeur de réseau IMS, un serveur P-CSCF (Proxy Call Session Control Function), un serveur I-CSCF (Interrogating Call Session Control Function), un serveur S-CSCF (Serving Call Session Control Function) et un serveur HSS. Les serveurs I-CSCF et S-CSCF dialoguent avec le serveur HSS via les interfaces Diameter Cx/Dx.

La fonction de chacune de ces entités et les interfaces Diameter Cx/Dx sont connues de l'homme du métier et ne sont donc pas décrites en détail ici. Seuls les éléments nécessaires à la compréhension de l'invention et de son contexte sont détaillés ci-après.

En référence à la figure 1, le terminal UE de l'utilisateur envoie au serveur P-CSCF du coeur de réseau IMS une première requête d'enregistrement REGISTER, conforme au protocole SIP (étape E10).

Cette première requête contient l'identité publique IdPub de l'utilisateur, ainsi qu'une adresse de contact du terminal UE dans le réseau. L'utilisateur n'est toutefois pas tenu de fournir son identité privée dans cette première requête d'enregistrement.

Sur réception de cette première requête, le serveur P-CSCF sollicite un serveur DNS (Domain Name Server) de noms de domaine (non représenté sur la figure 1), pour obtenir l'adresse du serveur I-CSCF du réseau nominal de l'utilisateur du terminal UE.

Puis il transmet la première requête d'enregistrement reçue du terminal UE au serveur I-CSCF désigné par le serveur DNS (étape E20).

Sur réception de cette première requête ne contenant que l'identité publique IdPub de l'utilisateur du terminal UE, le serveur I-CSCF, conformément à la norme 3GPP, engendre une identité privée IdPrivd pour l'utilisateur. Dans l'exemple envisagé à la figure 1, cette identité privée IdPrivd est dérivée à partir de l'identité publique IdPub (étape E30), comme décrit dans le document TS 24.229 au paragraphe §5.3.1.2.

Puis le serveur I-CSCF interroge le serveur HSS du coeur de réseau IMS à l'aide d'une requête UAR (User Authorization Request) conforme au protocole Diameter, contenant le couple formé de l'identité publique IdPub reçue dans la première requête d'enregistrement et de l'identité privée IdPrivd dérivée à partir de l'identité publique IdPub par le serveur I-CSCF (étape E40). Cette interrogation vise à contrôler que l'utilisateur associé à ces identités est bien autorisé à s'enregistrer auprès du coeur de réseau IMS.

Dans l'exemple de la figure 1, sur réception de la requête UAR, le serveur HSS détecte que l'identité privée IdPrivd est une identité dérivée de l'identité publique IdPub conformément à la procédure de dérivation décrite dans le document TS 24.229.

Il vérifie alors que l'utilisateur du terminal UE a le droit de s'enregistrer auprès du coeur de réseau IMS, sur la base uniquement de l'identité publique IdPub utilisée par le terminal UE (étape E50). Autrement dit, le contrôle effectué par le serveur HSS se limite à vérifier que l'identité publique IdPub fournie par le terminal UE dans la première requête d'enregistrement correspond bien à un utilisateur connu du coeur de réseau (i.e. qui s'est déclaré au cours d'une souscription préalable auprès de l'opérateur du coeur de réseau), et donc autorisé à s'enregistrer auprès de celui-ci.

Le cas échéant, le serveur HSS envoie au serveur I-CSCF un message de réponse Diameter UAA (User Authorization Answer), l'informant que l'utilisateur associé à l'identité publique IdPub est connu et a le droit de s'enregistrer auprès du coeur de réseau. Il indique également, dans ce message de réponse, les capacités obligatoires et optionnelles du serveur S-CSCF qui doit être sélectionné pour l'enregistrement du terminal UE (étape E60).

Sur réception de ce message de réponse, le serveur I-CSCF sélectionne un serveur S-CSCF disposant des capacités indiquées par le serveur HSS, et transfère la première requête d'enregistrement reçue en provenance du terminal UE vers le serveur S-CSCF ainsi sélectionné (étape E70).

Sur réception de la première requête d'enregistrement du terminal UE, le serveur S-CSCF crée un contexte associé au terminal UE et démarre son authentification.

A cette fin, il demande au serveur HSS des informations permettant l'authentification du terminal UE, par l'intermédiaire d'une requête Diameter MAR (Multimedia Authentication Request) (étape E80). Cette requête MAR contient, conformément à l'interface Diameter spécifiée entre le serveur S-CSCF et le serveur HSS, l'identité publique IdPub contenue dans la requête d'enregistrement, ainsi qu'une identité privée engendrée par le serveur S-CSCF pour l'utilisateur (par exemple l'identité privée IdPrivd).

Le serveur S-CSCF reçoit, en réponse à cette requête, via un message Diameter MAA (Multimedia Authentication Answer), l'identité privée IdPriv ainsi que le mot de passe MdP de l'utilisateur légitime associé à l'identité publique IdPub, enregistrés lors de sa souscription auprès du serveur HSS en association avec son identité publique IdPub (étape 90). Ces informations sont bien entendu chiffrées de sorte à assurer leur confidentialité. Elles sont stockées dans le contexte de l'utilisateur précédemment créé.

Il convient de noter que, pour des raisons de sécurité évidentes, l'identité privée IdPriv enregistrée au niveau du serveur HSS lors de la souscription de l'utilisateur légitime de l'identité publique IdPub est généralement différente de l'identité privée IdPrivd que l'on peut dériver de l'identité publique en appliquant les recommandations du standard 3GPP.

Le serveur S-CSCF retourne alors une réponse 401 Unauthorized au terminal UE contenant un défi, pour que le terminal UE calcule, en utilisant son mot de passe, un résultat d'authentification d'usager (étape E100).

Le terminal UE évalue le résultat d'authentification d'usager R à l'aide du challenge communiqué par le serveur S-CSCF (étape E110).

Puis il envoie une seconde requête d'enregistrement REGISTER au serveur P-CSCF contenant son identité publique IMPU, son identité privée et le résultat d'authentification d'usager R qu'il vient d'évaluer (étape E120).

On note IdPriv' l'identité privée insérée par le terminal UE dans la seconde requête REGISTER envoyée au serveur P-CSCF.

Le serveur P-CSCF relaie cette seconde requête vers le serveur I-CSCF (étape E130).

Le serveur I-CSCF détecte que la seconde requête REGISTER contient une identité publique IdPub et une identité privée IdPriv' de l'utilisateur du terminal UE.

Il interroge alors le serveur HSS à l'aide d'une requête Diameter UAR (User Authorization Request) contenant le couple formé de l'identité publique IdPub et de l'identité privée IdPriv' reçues dans la seconde requête d'enregistrement, et ce, afin de déterminer si l'utilisateur associé à ces deux identités est autorisé à s'enregistrer auprès du coeur de réseau IMS (étape E140).

Deux situations peuvent alors se présenter :
(1) le serveur HSS détecte que l'identité privée IdPriv' extraite de la seconde requête d'enregistrement est dérivée de l'identité publique IdPub conformément à la procédure de dérivation décrite dans le document TS 24.229 : dans ce cas, et comme décrit précédemment, le serveur HSS contrôle le droit d'enregistrement de l'utilisateur auprès du coeur de réseau uniquement sur la base de l'identité publique IdPub (étape E150) ; ou
(2) l'identité privée IdPriv' n'est pas considérée par le serveur HSS comme résultant d'une dérivation de l'identité publique IdPub au sens de la norme 3GPP : dans ce cas, le serveur HSS contrôle le droit d'enregistrement de l'utilisateur auprès du coeur de réseau sur la base du couple formé de l'identité publique IdPub et de l'identité privée IdPriv' contenues dans la requête UAR (étape E150). Autrement dit, l'utilisateur du terminal UE sera autorisé à s'enregistrer uniquement si l'identité privée IdPriv' spécifiée par le terminal UE dans la seconde requête d'enregistrement concorde avec l'identité IdPriv stockée au niveau du HSS (et déclarée, en association avec l'identité publique IdPub, lors de la souscription de l'utilisateur auprès du coeur de réseau IMS).

Le cas échéant, le serveur HSS envoie au serveur I-CSCF une réponse positive Diameter UAA (User Authorization Answer), l'informant que l'utilisateur associés aux identités (IdPub, IdPriv') est bien connu du coeur de réseau et a le droit de s'enregistrer (étape E160).

Sur réception de cette réponse positive UAA, le serveur I-CSCF transfère la seconde requête d'enregistrement reçue en provenance du terminal UE vers le serveur S-CSCF associé au cours de l'étape E70 à ce terminal (étape E170).

Si la réponse UAA est négative, la requête d'enregistrement de l'utilisateur du terminal UE est rejetée par le serveur I-CSCF (non représentée).

Le serveur S-CSCF vérifie la concordance des informations d'authentification (IdPub, IdPriv' et R) fournies par le terminal UE avec les informations fournies (IdPub, IdPriv et MdP) par le serveur HSS (étape E180), et répond au terminal UE en fonction du résultat de cette vérification (étape E190).

Si la seconde requête d'enregistrement est rejetée par le serveur S-CSCF, celui-ci informe le terminal UE du motif de ce rejet dans son message de réponse adressé au terminal UE (par exemple, non concordance entre l'identité privée IdPriv' et l'identité privée IdPriv ou encore, non concordance entre les mots de passe). Ce message est relayé par le serveur I-CSCF au terminal UE via le serveur P-CSCF.

Cette procédure d'authentification présente malheureusement une faille en termes de sécurité, et un pirate informatique peut exploiter aisément ce mode de fonctionnement connu des entités I-CSCF, HSS et S-CSCF pour tenter des attaques sur le mot de passe ou l'identité privée d'un utilisateur légitime à partir de son identité publique.

En effet, il est facile pour un pirate informatique, en appliquant les recommandations du standard 3GPP, de dériver l'identité privée IdPrivd à partir de l'identité publique IdPub, et de fournir cette identité privée dérivée au coeur de réseau IMS dans la seconde requête d'enregistrement (i.e. IdPriv'=IdPrivd).

Cette seconde requête d'enregistrement sera alors propagée jusqu'au serveur S-CSCF, comme décrit précédemment en référence à la figure 1, et ce, même si l'identité privée IdPrivd ne correspond pas à l'identité privée IdPriv stockée au niveau du serveur HSS en association avec l'identité publique IdPub.

Certes le serveur S-CSCF, du fait de la non concordance des identités privées IdPrivd et IdPriv, rejettera la seconde requête d'enregistrement émise par le pirate informatique. Mais il fournira également dans le même temps, au pirate informatique, une information sur le motif de ce rejet (absence de concordance des identités privées ou des mots de passe).

Or cette information peut s'avérer extrêmement précieuse pour le pirate informatique puisqu'elle l'informe de l'état d'avancement de son attaque. Celui-ci pourra alors essayer de trouver par force brute la bonne identité privée ou le bon mot de passe de l'utilisateur légitime de l'identité publique IdPub, c'est-à-dire au moyen de multiples tentatives d'authentification auprès du serveur S-CSCF.

Le document US 2012/0036270 décrit un procédé de gestion d'identités d'utilisateurs dans un système IMS, et plus particulièrement un procédé de gestion d'identités publiques d'utilisateurs qui sont partagées par deux identités privées d'utilisateurs ou plus.

### Objet et résumé de l'invention

L'invention propose de remédier notamment à cet inconvénient, et d'augmenter le niveau de sécurité d'un coeur de réseau IP multimédia s'appuyant sur une technique d'authentification prévoyant la fourniture des identités d'un utilisateur en deux temps telle que la procédure d'authentification SIP Digest (ou HTTP Digest) décrite précédemment, en bloquant (i.e. en rejetant) les requêtes d'enregistrement émises par les terminaux le plus en amont possible (par rapport au sens de parcours de la requête) dans le coeur de réseau, autrement dit, dès l'entrée des requêtes d'enregistrement dans le coeur de réseau nominal de l'utilisateur, et ce, dès lors que les identités véhiculées dans ces requêtes d'enregistrement ne concordent pas avec les identités enregistrées lors de la souscription de l'utilisateur légitime de l'identité publique.

A cet effet, l'invention propose un procédé de vérification destiné à être mis en oeuvre dans un coeur de réseau IP multimédia, ce procédé comprenant :
- une étape de réception, par un serveur d'interrogation du coeur de réseau, d'une requête d'enregistrement auprès d'un serveur d'enregistrement du coeur de réseau, cette requête d'enregistrement contenant une identité publique d'un utilisateur, le serveur d'interrogation étant situé en amont du serveur d'enregistrement dans le coeur de réseau ; et
- une étape d'interrogation, par le serveur d'interrogation, d'un serveur de données d'utilisateurs du coeur de réseau comprenant l'envoi au serveur de données d'utilisateurs d'une requête de contrôle d'un droit d'enregistrement de l'utilisateur auprès du serveur d'enregistrement du coeur de réseau, cette requête de contrôle contenant l'identité publique de l'utilisateur contenue dans la requête d'enregistrement et une identité privée de l'utilisateur ;
ce procédé de vérification étant remarquable en ce qu'il comprend en outre une étape d'insertion par le serveur d'interrogation, dans la requête de contrôle avant son envoi au serveur de données d'utilisateurs, d'une information reflétant si l'identité privée de l'utilisateur contenue dans la requête de contrôle a été générée par le serveur d'interrogation ou reçue par celui-ci dans la requête d'enregistrement.

L'invention vise aussi un procédé de contrôle destiné à être mis en oeuvre par un serveur de données d'utilisateurs d'un coeur de réseau IP multimédia, comprenant :
- une étape de réception d'une requête de contrôle d'un droit d'enregistrement d'un utilisateur auprès d'un serveur d'enregistrement du coeur de réseau, cette requête de contrôle provenant d'un serveur d'interrogation du coeur de réseau situé en amont du serveur d'enregistrement, et contenant :
   ∘ une identité publique et une identité privée de l'utilisateur ; et
   ∘ une information reflétant si l'identité privée de l'utilisateur contenue dans la requête de contrôle a été générée par le serveur d'interrogation ou reçue par ce dernier dans une requête d'enregistrement de l'utilisateur ;
- si le serveur de données détermine à partir de cette information que l'identité privée de l'utilisateur n'a pas été générée par le serveur d'interrogation, une étape de contrôle au cours de laquelle il vérifie que le couple formé de l'identité publique et de l'identité privée contenues dans la requête de contrôle correspond à un utilisateur autorisé à s'enregistrer ;
- sinon, une étape de contrôle au cours de laquelle il vérifie que l'identité publique contenue dans la requête de contrôle correspond à un utilisateur autorisé à s'enregistrer.

Corrélativement, l'invention vise également un serveur d'interrogation d'un coeur de réseau IP multimédia, comprenant :
- des moyens de réception d'une requête d'enregistrement auprès d'un serveur d'enregistrement du coeur de réseau, contenant une identité publique d'un utilisateur ;
- des moyens d'interrogation d'un serveur de données d'utilisateurs du coeur de réseau comprenant des moyens d'envoi au serveur de données d'utilisateurs, d'une requête de contrôle d'un droit d'enregistrement de l'utilisateur auprès du serveur d'enregistrement du coeur de réseau, cette requête de contrôle contenant l'identité publique de l'utilisateur contenue dans la requête d'enregistrement et une identité privée de l'utilisateur ;
ce serveur d'interrogation étant situé en amont du serveur d'enregistrement et étant remarquable en ce qu'il comprend en outre des moyens d'insertion, dans la requête de contrôle, avant son envoi au serveur de données d'utilisateurs, d'une information reflétant si l'identité privée de l'utilisateur contenue dans la requête de contrôle a été générée par le serveur d'interrogation ou reçue par celui-ci dans la requête d'enregistrement.

L'invention vise aussi un serveur de données d'utilisateurs d'un coeur de réseau IP multimédia comprenant :
- des moyens de réception d'une requête de contrôle d'un droit d'enregistrement d'un utilisateur auprès d'un serveur d'enregistrement du coeur de réseau, cette requête de contrôle provenant d'un serveur d'interrogation du coeur de réseau situé en amont du serveur d'enregistrement, et contenant :
   ∘ une identité publique et une identité privée de l'utilisateur ; et
   ∘ une information reflétant si l'identité privée de l'utilisateur contenue dans la requête de contrôle a été générée par le serveur d'interrogation ou reçue par ce dernier dans une requête d'enregistrement de l'utilisateur ; et
- des moyens de contrôle configurés :
   ∘ pour vérifier que le couple formé de l'identité publique et de l'identité privée contenues dans la requête de contrôle correspond à un utilisateur autorisé à s'enregistrer, si les moyens de contrôle déterminent à partir de l'information contenue dans la requête de contrôle que l'identité privée de l'utilisateur n'a pas été générée par le serveur d'interrogation ; et
   ∘ pour vérifier que l'identité publique contenue dans la requête de contrôle correspond à un utilisateur autorisé à s'enregistrer, sinon.

Comme mentionné précédemment, l'invention a une application privilégiée mais non limitative lorsque le coeur de réseau IP multimédia mettant en oeuvre une architecture IMS, et dans lequel :
- le serveur d'interrogation est un serveur I-CSCF ;
- le serveur de données d'utilisateurs est un serveur HSS ; et
- le serveur d'enregistrement est un serveur S-CSCF.

Dans une variante de réalisation, on peut envisager que d'autres entités ou serveurs du coeur de réseau IMS (i.e. en plus du serveur I-CSCF) insèrent également dans leurs requêtes d'interrogation du serveur de données d'utilisateurs, une information telle que proposée dans l'invention, reflétant l'origine de l'identité privée incluse dans cette requête.

Ainsi, notamment, une telle information peut être insérée par le serveur d'enregistrement S-CSCF dans une requête MAR qu'il envoie au serveur HSS pour obtenir des données d'authentification de l'utilisateur, ou, dans certains contextes, dans une requête SAR (Server Assignment Request) telle que décrite dans le standard 3GPP.

Autrement dit, dans cette variante de réalisation, le procédé de vérification comprend en outre :
- une étape de réception par le serveur d'enregistrement, de la requête d'enregistrement contenant l'identité publique de l'utilisateur ;
- une étape d'interrogation du serveur de données d'utilisateurs, par le serveur d'enregistrement, comprenant l'envoi au serveur de données d'utilisateurs d'une requête d'obtention de données permettant une authentification de l'utilisateur, cette requête d'obtention contenant l'identité publique de l'utilisateur contenue dans la requête d'enregistrement et une identité privée de l'utilisateur ; et
- une étape d'insertion par le serveur d'enregistrement, dans la requête d'obtention, avant son envoi au serveur de données d'utilisateurs, d'une information reflétant si l'identité privée de l'utilisateur contenue dans la requête d'obtention a été générée par le serveur d'enregistrement ou reçue par celui-ci dans la requête d'enregistrement.

De façon similaire, le serveur de données d'utilisateurs auquel l'information concernant l'origine de l'identité privée est adressée, peut être également un serveur SLF (Subscriber Location Function) du coeur de réseau IMS. Un tel serveur SLF est, de façon connue, interrogé par le serveur I-CSCF, via une interface Diameter, sur réception d'une requête d'enregistrement d'un utilisateur afin d'identifier quel serveur HSS le serveur I-CSCF doit interroger pour cet utilisateur. La requête utilisée pour interroger le serveur I-CSCF contient une identité publique et une identité privée de l'utilisateur (éventuellement dérivée par le serveur I-CSCF).

On peut également envisager une autre variante de réalisation dans laquelle un serveur S-CSCF interroge un serveur SLF à l'aide d'une requête contenant une identité publique et une identité privée de l'utilisateur (éventuellement dérivée par le serveur S-CSCF), ainsi qu'une information telle que proposée dans l'invention, reflétant l'origine de l'identité privée de l'utilisateur.

Ces variantes de réalisation proposent ainsi de modifier de façon globale les interfaces de communication (typiquement les interfaces Diameter Cx/Dx) définies aujourd'hui pour interroger les serveurs de données d'utilisateurs (ou d'abonnés) d'un coeur de réseau IMS, tels que les serveurs HSS et SLF : il n'est ainsi pas nécessaire d'établir dans ces interfaces une distinction entre les types de serveurs impliqués (ex. I-CSCF vs S-CSCF, ou HSS vs SLF), de sorte que leur évolution pour intégrer l'invention est simplifiée.

Par ailleurs, les procédés de vérification et de contrôle selon l'invention s'appliquent de façon privilégiée dans le cadre d'une procédure d'authentification de l'utilisateur conforme à une procédure SIP Digest ou HTTP Digest, c'est-à-dire dans le cadre d'une procédure d'authentification prévoyant la fourniture des identités publique et privée d'un utilisateur en deux temps.

Toutefois, on pourrait envisager d'appliquer l'invention indépendamment de cette hypothèse relative à la fourniture en deux temps des identités publique et privée de l'utilisateur, notamment par souci de simplification des procédures mises en oeuvre par le coeur de réseau IP multimédia lorsque celui-ci supporte différents types de procédures d'authentification.

L'invention s'appuie ainsi sur une évolution du comportement notamment du serveur d'interrogation, point d'entrée des requêtes émises par le terminal de l'utilisateur dans le coeur de réseau nominal de l'utilisateur, et du serveur de données d'utilisateurs.

Plus précisément, l'invention propose avantageusement d'insérer, dans la requête de contrôle émise par le serveur d'interrogation pour vérifier auprès du serveur de données d'utilisateurs le droit de l'utilisateur à s'enregistrer auprès du coeur de réseau, une information supplémentaire par rapport aux identités publique et privée de l'utilisateur, cette information étant renseignée par le serveur d'interrogation lui-même, et reflétant si l'identité privée présente dans la requête de contrôle a été ou non engendrée par le serveur d'interrogation (autrement dit, si elle a été reçue ou non dans la requête d'enregistrement). Cette information étant renseignée par le coeur de réseau lui-même, et est donc considérée comme fiable.

Il s'agit, par le biais de cette information, d'indiquer au serveur de données d'utilisateurs l'origine de l'identité privée, pour que celui-ci adapte en conséquence le contrôle d'identité(s) qu'il va réaliser. Plus particulièrement, l'information insérée par le serveur d'interrogation, conformément à l'invention, permet au serveur de données d'utilisateurs de déterminer si le contrôle qu'il doit effectuer, doit porter sur l'identité publique seule de l'utilisateur, ou sur le couple formé par l'identité publique et l'identité privée de l'utilisateur présentes dans la requête de contrôle adressée par le serveur d'interrogation. Il est ainsi possible de détecter très rapidement dans le coeur de réseau une usurpation de l'identité de l'utilisateur.

En effet, le serveur d'interrogation est amené à générer lui-même une identité privée pour l'utilisateur uniquement lorsque la requête d'enregistrement qu'il reçoit du terminal cherchant à s'enregistrer avec l'identité publique de l'utilisateur ne contient pas une telle identité privée.

Comme expliqué ci-dessus, dans l'état actuel des normes et des usages, lorsqu'un serveur d'interrogation ou plus généralement une entité du coeur de réseau, génère une identité privée factice pour un utilisateur du fait de l'absence d'une telle identité privée dans la requête d'enregistrement de l'utilisateur, il le fait généralement selon une règle de dérivation connue, par exemple à partir de l'identité publique de cet utilisateur ou d'une valeur prédéfinie (ex. valeur nulle). Il convient toutefois de noter que l'invention s'appliquerait tout aussi bien si de nouvelles normes ou de nouveaux usages prévoyaient un autre processus pour engendrer cette identité privée factice.

Cette règle de dérivation étant connue, elle peut être aisément utilisée par un pirate informatique pour générer une identité privée associée à l'identité publique de l'utilisateur, afin de s'enregistrer auprès du coeur de réseau.

Or, comme mentionné précédemment, pour des raisons de sécurité évidentes, l'identité privée associée à l'identité publique de l'utilisateur lors de sa souscription auprès de l'opérateur du coeur de réseau est généralement choisie distincte de l'identité privée que l'on peut obtenir par dérivation de l'identité publique de l'utilisateur conformément aux recommandations de la norme ou plus généralement à l'aide de la règle de dérivation précitée.

Par conséquent, le fait que le terminal fournisse comme identité privée, l'identité dérivée à l'aide d'une règle de dérivation, laisse planer un doute quant à l'honnêteté de l'utilisateur du terminal. Ce cas, considéré comme suspect par les inventeurs, est facilement détecté et maîtrisé conformément à l'invention grâce à la mise en oeuvre d'un contrôle plus avancé du serveur de données d'utilisateurs concernant le droit de l'utilisateur du terminal à s'enregistrer auprès du coeur de réseau, basé sur le couple formé de l'identité publique et de l'identité privée fournies par le terminal, et non uniquement sur l'identité publique.

De cette sorte, si le couple (identité publique, identité privée) fourni par le terminal dans la requête d'enregistrement ne correspond pas au couple d'identités enregistrées lors de la souscription de l'utilisateur légitime, et stockées au niveau du serveur de données d'utilisateurs, la requête d'enregistrement émise par le terminal sera bloquée et rejetée par le serveur d'interrogation, avant même d'être transférée vers le serveur d'enregistrement.

Par conséquent, grâce à l'invention, on évite le retour d'informations émises par le serveur d'enregistrement et précieuses pour un éventuel pirate informatique pour suivre la progression de son attaque. Le pirate informatique n'a en outre accès à aucune information critique concernant les paramètres d'authentification de l'utilisateur légitime de l'identité publique et notamment son mot de passe, puisque la requête d'enregistrement est bloquée en cas de contrôle négatif du serveur de données d'utilisateurs dès le serveur d'interrogation, qui se situe en amont du serveur d'enregistrement et ignore les paramètres d'authentification de l'utilisateur (ces paramètres ne sont transmis qu'au serveur d'enregistrement par le serveur de données d'utilisateurs).

D'autre part, l'invention permet de limiter les échanges superflus entre le serveur d'interrogation et le serveur d'enregistrement : les ressources du coeur de réseau IP multimédia sont ainsi économisées.

La mise en oeuvre de l'invention est avantageusement relativement simple : elle nécessite en effet seulement l'ajout d'une information, déjà connue du serveur d'interrogation, dans la requête de contrôle envoyée au serveur de données d'utilisateurs (par exemple, dans un champ de la requête de contrôle prévu à cet effet, ou sous la forme d'un suffixe ou d'un préfixe ajouté à l'identité privée), et son interprétation par le serveur de données d'utilisateurs.

L'invention ne demande donc d'apporter que très peu de modifications aux modes de fonctionnement des serveurs d'interrogation, d'enregistrement et de données d'utilisateurs définis actuellement dans la norme 3GPP pour un coeur de réseau IMS.

Il convient de noter que l'information ajoutée par le serveur d'interrogation conformément à l'invention peut être ajoutée dans chaque requête de contrôle (que l'identité privée fournie dans cette requête soit ou non dérivée de l'identité publique) ou en variante, uniquement dans les requête de contrôle où une identité privée dérivée de l'identité publique est fournie au serveur de données d'utilisateurs.

De manière similaire, le traitement des requêtes d'enregistrement conformément à l'invention peut être mis en oeuvre indifféremment sur toutes les requêtes d'enregistrement reçues par le serveur d'interrogation, autrement dit à la fois sur les (premières) requêtes d'enregistrement émises par le terminal contenant l'identité publique seulement de l'utilisateur du terminal, et sur les (secondes) requêtes d'enregistrement émises par le terminal contenant l'identité publique et l'identité privée de l'utilisateur.

On systématise de cette sorte le traitement des requêtes d'enregistrement par le serveur d'interrogation (pas d'intelligence supplémentaire à apporter au serveur d'interrogation liée à la distinction des requêtes d'enregistrement et de leur traitement), ce qui permet de maintenir une faible complexité du serveur d'interrogation.

En variante, on peut envisager que le serveur d'interrogation n'insère l'information concernant l'origine de la dérivation de l'identité publique que pour les (secondes) requêtes d'enregistrement émises par le terminal qui contiennent à la fois l'identité publique et l'identité privée de l'utilisateur, ainsi que le résultat d'authentification de l'utilisateur au défi envoyé par le serveur d'enregistrement.

De cette sorte, le serveur de données d'utilisateurs ne modifie son comportement par rapport à la norme que lorsqu'il détecte la présence de l'information insérée conformément à l'invention dans la requête de contrôle du droit d'enregistrement de l'utilisateur qui lui est envoyée par le serveur d'interrogation.

Dans un mode de réalisation de l'invention, le procédé de vérification comprend en outre, lorsque le serveur d'interrogation détermine à partir d'une réponse à la requête de contrôle reçue du serveur de données que l'utilisateur n'est pas autorisé à s'enregistrer, une étape d'envoi au serveur d'enregistrement d'un message de libération des ressources allouées à l'utilisateur.

Ce mode de réalisation s'applique de façon privilégiée lorsque le serveur d'interrogation a déjà transféré une première requête d'enregistrement en provenance du terminal et contenant une identité publique de l'utilisateur vers un serveur d'enregistrement du coeur de réseau, et que celui-ci a répondu négativement au terminal en lui retournant un challenge afin qu'il s'authentifie. Lors du traitement de la première requête d'enregistrement par le serveur d'enregistrement, un contexte associé à l'utilisateur a effectivement été créé par le serveur d'enregistrement et des ressources lui ont été allouées.

Ce mode de réalisation de l'invention permet ainsi de libérer rapidement les ressources allouées à l'utilisateur par le serveur d'enregistrement, autrement dit, dès que l'on détecte que le terminal n'a pas le droit de s'enregistrer auprès du coeur de réseau IP multimédia.

Dans un autre mode de réalisation, les ressources allouées à l'utilisateur par le serveur d'enregistrement sont libérées à l'issue d'un temporisateur armé suite à l'envoi par le serveur d'enregistrement au terminal d'un message lui demandant de s'authentifier et contenant un défi.

Dans un mode particulier de réalisation, les différentes étapes du procédé de vérification et du procédé de contrôle sont déterminées par des instructions de programmes d'ordinateurs.

En conséquence, l'invention vise aussi un programme d'ordinateur sur un support d'informations, ce programme étant susceptible d'être mis en oeuvre dans un serveur d'interrogation ou plus généralement dans un ordinateur, ce programme comportant des instructions adaptées à la mise en oeuvre des étapes d'un procédé de vérification tel que décrit ci-dessus.

L'invention vise également un programme d'ordinateur sur un support d'informations, ce programme étant susceptible d'être mis en oeuvre dans un serveur de données d'utilisateurs ou plus généralement dans un ordinateur, ce programme comportant des instructions adaptées à la mise en oeuvre des étapes d'un procédé de contrôle tel que décrit ci-dessus.

Ces programmes peuvent utiliser n'importe quel langage de programmation, et être sous la forme d'un code source, code objet, ou d'un code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, l'invention vise également un coeur de réseau IP multimédia comprenant un serveur d'interrogation et un serveur de données d'utilisateurs conformes à l'invention.

Dans une variante de réalisation, ce coeur de réseau comprend en outre un serveur d'enregistrement comprenant :
- des moyens de réception de la requête d'enregistrement contenant l'identité publique de l'utilisateur ;
- des moyens d'interrogation du serveur de données d'utilisateurs, comprenant des moyens d'envoi au serveur de données d'utilisateurs d'une requête d'obtention de données permettant une authentification de l'utilisateur, cette requête d'obtention contenant l'identité publique de l'utilisateur contenue dans la requête d'enregistrement et une identité privée de l'utilisateur ; et
- des moyens d'insertion dans la requête d'obtention, avant son envoi au serveur de données d'utilisateurs, d'une information reflétant si l'identité privée de l'utilisateur contenue dans la requête d'obtention a été générée par le serveur d'enregistrement ou reçue par celui-ci dans la requête d'enregistrement.

Dans une autre variante, le coeur de réseau met en oeuvre une architecture IMS et :
- le serveur d'interrogation est un serveur I-CSCF ;
- le serveur de données d'utilisateurs est un serveur HSS ; et
- le serveur d'enregistrement est un serveur S-CSCF.

Le coeur de réseau IP multimédia selon l'invention bénéficie des mêmes avantages que ceux décrits précédemment pour le serveur d'interrogation et le serveur de données.

On peut également envisager, dans d'autres modes de réalisation, que le procédé de vérification, le procédé de contrôle, le serveur d'interrogation, le serveur de données d'utilisateurs et le coeur de réseau selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif.

Sur les figures :
- la figure 1, déjà décrite, représente le traitement des requêtes d'enregistrement dans un coeur de réseau IMS, tel que prévu par la norme 3GPP dans sa définition actuelle ;
- la figure 2 représente, de façon schématique, un coeur de réseau IP multimédia, un serveur d'interrogation et un serveur de données d'utilisateurs conformes à l'invention, dans un mode particulier de réalisation ;
- les figures 3A et 3B illustrent respectivement les architectures matérielles du serveur d'interrogation et du serveur de données de la figure 2 ;
- la figure 4 représente, sous forme d'ordinogramme, les principales étapes d'un procédé de vérification telles qu'elles sont mises en oeuvre, dans un mode particulier de réalisation, par le serveur d'interrogation de la figure 2 ; et
- la figure 5 représente, sous forme d'ordinogramme, les principales étapes d'un procédé de contrôle telles qu'elles sont mises en oeuvre, dans un mode particulier de réalisation, par le serveur de données d'utilisateurs de la figure 2.

### Description détaillée de l'invention

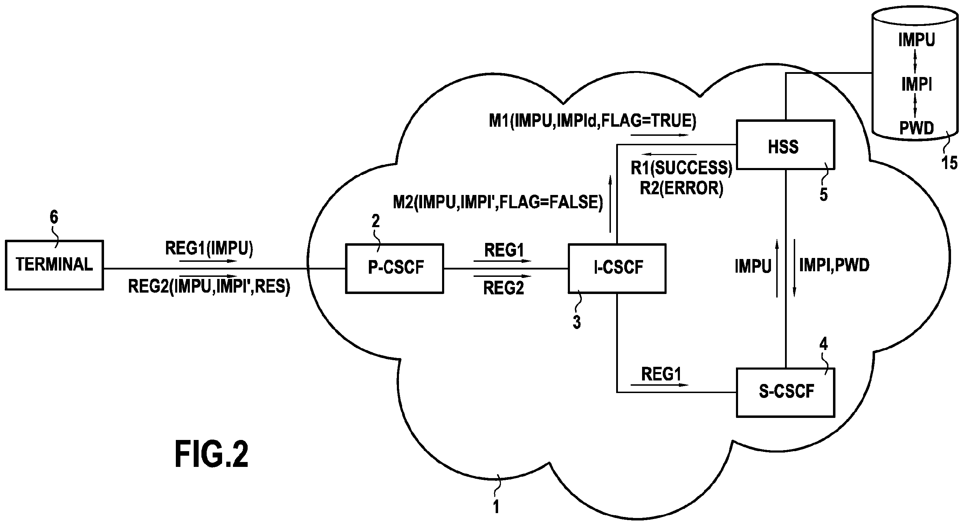

La **figure 2** représente, dans son environnement, un coeur de réseau IP multimédia 1 conforme à l'invention, dans un mode particulier de réalisation.

Dans l'exemple envisagé sur cette figure, le coeur de réseau 1 est un coeur de réseau utilisant une technologie de voix sur IP (VoIP), et mettant en oeuvre une architecture IMS telle que définie par le standard 3GPP dans le document TS 23.228 intitulé « IP Multimedia Subsystem; Stage 2 », Release 11, 22 juin 2012. Une telle architecture utilise de façon connue en soi le protocole SIP d'initiation de session.

Ces hypothèses ne sont toutefois pas limitatives en soi, et l'invention s'applique également à d'autres coeurs de réseau IP multimédia ainsi qu'à d'autres protocoles d'initiation de session.

De façon connue, un coeur de réseau implémentant une architecture IMS (ou coeur de réseau IMS) comprend plusieurs entités fonctionnelles, dont une entité CSCF (Call Session Control Function) composée de plusieurs serveurs parmi lesquels :
- un serveur P-CSCF, point de raccordement entre un réseau d'accès et le coeur de réseau IMS 1 ;
- un serveur I-CSCF, point d'aiguillage des requêtes de services des terminaux (ex. requêtes d'enregistrement) dans le coeur de réseau IMS 1 ; et
- un serveur S-CSCF (Serving-Call Session Control Function), en charge en particulier de l'enregistrement des terminaux auprès du coeur de réseau IMS et du contrôle des sessions de ces terminaux.

Ainsi, dans l'exemple illustré à la figure 2, le coeur de réseau IMS 1 comprend un serveur P-CSCF 2, un serveur I-CSCF 3 et un serveur S-CSCF 4. Le serveur I-CSCF 3 est situé en amont du serveur S-CSCF 4 (par rapport au sens de parcours des requêtes de service émises par les terminaux dans le coeur de réseau 1, et plus particulièrement ici par rapport au sens de parcours des requêtes d'enregistrement des utilisateurs auprès du coeur de réseau ; autrement dit, ces requêtes d'enregistrement transitent d'abord par le serveur I-CSCF 3 avant d'être aiguillées le cas échéant vers le serveur S-CSCF 4 pour être traitées).

Le coeur de réseau 1 comprend également un serveur HSS 5 de données d'utilisateurs, au sein duquel sont stockées les données de souscription des utilisateurs, abonnés auprès de l'opérateur du coeur de réseau 1. Le serveur HSS 5 interagit avec les autres entités du coeur de réseau 1 en utilisant le protocole Diameter, connu de l'homme du métier.

Les données de souscription stockées par le serveur HSS 5 comprennent notamment l'identité publique (ex. numéro de téléphone, nom de contact, adresse SIP URI (Uniform Request Identifier)) de chaque utilisateur, à laquelle sont rattachées les informations des services auxquels l'utilisateur a droit (autrement dit son profil de services), ainsi que son identité privée, à laquelle sont rattachées les informations d'authentification de l'utilisateur (paramètres d'accès tels qu'un mot de passe par exemple). Ces deux identités sont nécessaires à chaque utilisateur souhaitant s'enregistrer auprès du coeur de réseau 1.

Ainsi, on suppose ici qu'un utilisateur U a déclaré, lors d'une souscription préalable auprès de l'opérateur du coeur de réseau 1, son identité publique IMPU en association avec une identité privée IMPI et un mot de passe PWD, et que ces informations sont stockées dans le serveur HSS 5.

Conformément au mode de fonctionnement d'un coeur de réseau IMS, pour pouvoir accéder aux services offerts par l'opérateur du coeur de réseau 1, un utilisateur doit tout d'abord s'enregistrer auprès du coeur de réseau 1 via un terminal (dans l'exemple illustré à la figure 2, via le terminal 6).

Cet enregistrement est encadré ici par une procédure d'authentification SIP Digest, au cours de laquelle l'utilisateur doit fournir successivement, par l'intermédiaire de deux requêtes d'enregistrement distinctes (requêtes SIP REGISTER), son identité publique, puis son identité privée associée à ses paramètres d'accès.

En variante, d'autres procédures d'authentification prévoyant la fourniture des identités d'un utilisateur en deux temps peuvent être envisagées dans le cadre de l'invention, comme par exemple une procédure d'authentification HTTP Digest.

Il convient toutefois de noter que l'invention peut également s'appliquer dans un contexte où l'utilisateur est tenu de fournir, dès la première requête d'enregistrement, son identité publique et son identité privée au coeur de réseau pour s'enregistrer.

Toute requête d'enregistrement SIP REGISTER émise à destination du coeur de réseau 1 par le terminal 6 en utilisant l'identité publique IMPU de l'utilisateur U transite par le serveur P-CSCF 2 avant d'être acheminée vers le serveur I-CSCF 3 gérant l'identité publique IMPU.

Le serveur I-CSCF 3 vérifie alors auprès du serveur HSS 5, via l'envoi d'une requête de contrôle UAR, que le terminal 6 est autorisé à s'enregistrer auprès du coeur de réseau 1 avant de transférer, le cas échéant, la requête d'enregistrement vers le serveur S-CSCF 4 pour traitement et authentification de l'utilisateur du terminal. La requête de contrôle UAR est donc une requête de contrôle d'un droit d'enregistrement de l'utilisateur auprès du serveur S-CSCF 4 (ou plus généralement d'un serveur d'enregistrement) du coeur de réseau 1 au sens de l'invention.

Cette requête de contrôle UAR utilisée pour interroger le serveur HSS 5 contient l'identité publique IMPU et une identité privée spécifiée le cas échéant dans la requête d'enregistrement par le terminal 6 ou générée par le serveur I-CSCF 3. Dans le mode de réalisation décrit ici, l'identité privée générée par le serveur I-CSCF 3 est dérivée à partir de l'identité publique IMPU en suivant les recommandations de la norme 3GPP spécifiées dans le document TS 24.229, au paragraphe 5.3.1.2. Bien entendu, d'autres règles de dérivation peuvent être envisagées en variante.

Le serveur I-CSCF 3 est un serveur d'interrogation conforme à l'invention. Il intègre ici les principales caractéristiques et fonctionnalités d'un serveur I-CSCF tel que défini par le standard 3GPP, ainsi que les caractéristiques d'une entité conforme à l'invention. Le serveur I-CSCF 3 est ainsi muni de moyens d'insertion dans la requête de contrôle, avant son envoi vers le serveur HSS 5, d'une information additionnelle reflétant si l'identité privée incluse dans cette requête de contrôle a été générée par lui à partir de l'identité publique de l'utilisateur.

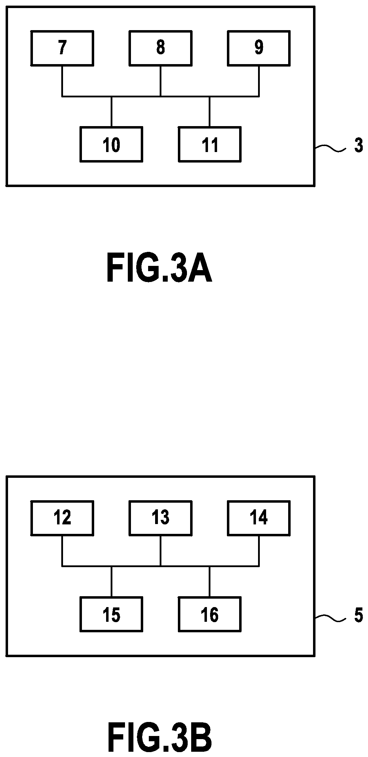

Ces moyens d'insertion sont ici des moyens logiciels. Plus précisément, dans le mode de réalisation décrit ici, le serveur I-CSCF 3 dispose de l'architecture matérielle d'un ordinateur, telle que représentée schématiquement à la **figure 3A****.**

Il comporte notamment un processeur 7, une mémoire vive 8, une mémoire morte 9, une mémoire flash non volatile 10, ainsi que des moyens de communication 11. Ces moyens de communication 11 mettent en oeuvre le protocole SIP pour communiquer avec les autres entités du coeur de réseau 1 et avec le terminal 6, ainsi que le protocole Diameter, pour communiquer avec le serveur HSS 5 de données d'utilisateurs.

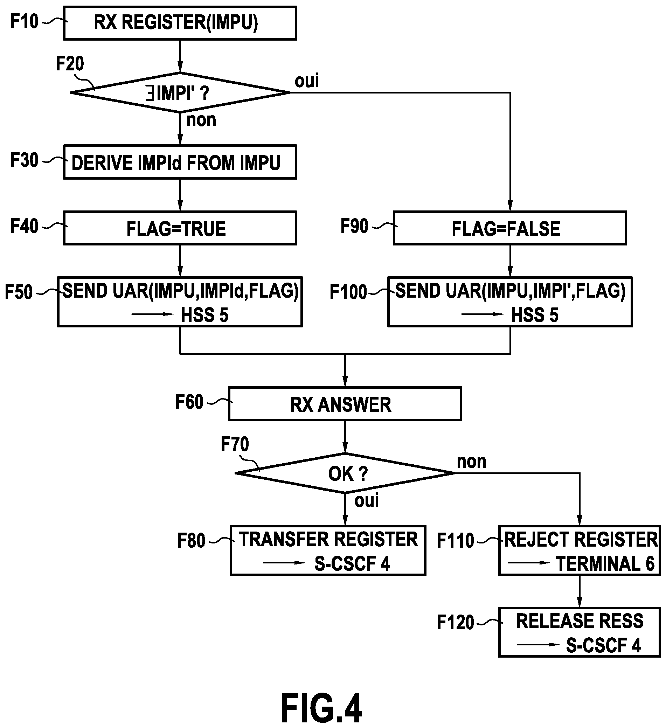

La mémoire morte 9 du serveur I-CSCF 3 constitue un support d'enregistrement conforme à l'invention, lisible par le processeur 7 et sur lequel est enregistré un programme d'ordinateur conforme à l'invention, comportant des instructions pour l'exécution des étapes d'un procédé de vérification conforme à l'invention décrites ultérieurement en référence à la figure 4.

Conformément à l'invention, l'information additionnelle insérée par le serveur I-CSCF 3 dans la requête de contrôle est interprétée par le serveur HSS 5, et lui permet d'ajuster le niveau du contrôle effectué pour déterminer si l'utilisateur du terminal 6 est légitime à s'enregistrer.

Le serveur HSS 5 est ainsi un serveur de données d'utilisateurs conforme à l'invention. Il intègre ici les principales caractéristiques et fonctionnalités d'un serveur HSS tel que défini par le standard 3GPP, et est muni par ailleurs de moyens aptes à interpréter l'information ajoutée par le serveur I-CSCF 3, et à réaliser un contrôle du droit d'enregistrement du terminal 6 auprès du coeur de réseau 1 en fonction de cette information.

Ces moyens sont ici des moyens logiciels. Plus précisément, dans le mode de réalisation décrit ici, le serveur HSS 5 dispose de l'architecture matérielle d'un ordinateur, telle que représentée schématiquement à la **figure 3B****.**

Il comporte notamment un processeur 12, une mémoire vive 13, une mémoire morte 14, une mémoire flash non volatile 15 contenant les données de souscription des abonnés auprès du coeur de réseau 1, ainsi que des moyens de communication 16 mettant en oeuvre le protocole Diameter pour communiquer avec les entités du coeur de réseau 1.

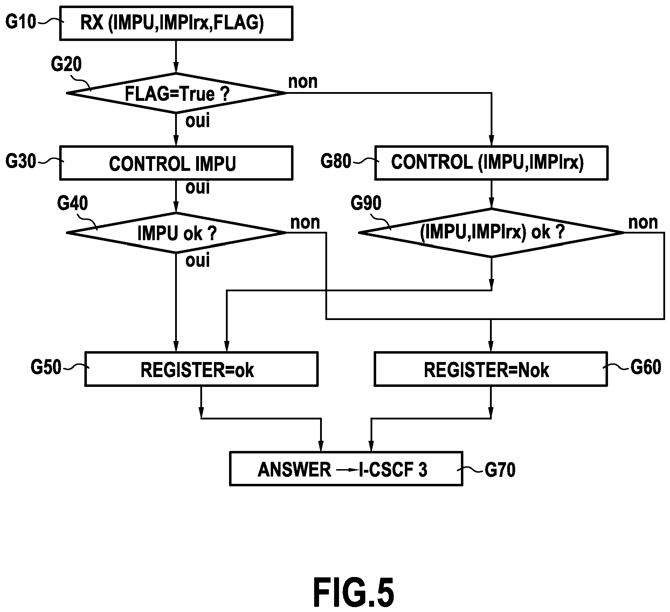

La mémoire morte 14 du serveur HSS 5 constitue un support d'enregistrement conforme à l'invention, lisible par le processeur 12 et sur lequel est enregistré un programme d'ordinateur conforme à l'invention, comportant des instructions pour l'exécution des étapes d'un procédé de contrôle conforme à l'invention décrites en référence à la figure 5.

Dans le mode de réalisation décrit ici, par souci d'harmonisation de l'interface de communication Diameter utilisée entre d'une part le serveur I-CSCF 3 et le serveur HSS 5, et d'autre part entre le serveur S-CSCF 4 et le serveur HSS 5, chaque requête envoyée par le serveur I-CSCF 3 et par le serveur S-CSCF 4 pour interroger le serveur HSS 5, contient une information supplémentaire conforme à l'invention concernant l'origine de l'identité privée contenue dans la requête utilisée pour interroger le serveur HSS 5 (i.e. reflétant si cette identité privée a été ou non générée par le serveur I-CSCF 3, respectivement par le serveur S-CSCF 4, ou provient de la requête d'enregistrement de l'utilisateur). Les différentes requêtes d'interrogation concernées sont ici les requêtes UAR de contrôle d'un droit d'enregistrement de l'utilisateur envoyées par le serveur I-CSCF 3, les requêtes MAR d'obtention de données permettant l'authentification de l'utilisateur et éventuellement les requêtes SAR envoyées par le serveur S-CSCF 4 au serveur HSS 5.

De façon similaire, l'invention s'applique également à d'autres serveurs de données d'utilisateurs utilisant les interfaces Diameter Cx/Dx pour communiquer avec les entités du coeur de réseau IMS, tels que par exemple un serveur SLF interrogé par le serveur I-CSCF 3 ou par le serveur S-CSCF 4, pour déterminer vers quel serveur HSS orienter les requêtes de contrôle associées aux requêtes d'enregistrement entrantes.

Nous allons maintenant décrire, en référence aux **figures 4** **et** **5** respectivement, les principales étapes d'un procédé de vérification conforme à l'invention et les principales étapes d'un procédé de contrôle conforme à l'invention, dans un mode particulier de réalisation dans lequel elles sont mises en oeuvre respectivement par le serveur I-CSCF 3 et par le serveur HSS 5 de la figure 2, lors d'une tentative d'enregistrement du terminal 6 auprès du coeur de réseau 1.

Afin de mieux illustrer l'invention, on suppose ici que le terminal 6 utilise, pour s'enregistrer auprès du coeur de réseau 1, l'identité publique IMPU de l'utilisateur U et une identité privée IMPI'.

L'utilisateur U est supposé connu du serveur HSS 5 (i.e. l'utilisateur U est un utilisateur légitime de l'identité publique IMPU), suite à une souscription préalable auprès de l'opérateur du coeur de réseau 1 : comme mentionné précédemment, il est associé, dans la mémoire non volatile 15 du serveur HSS 5, à l'identité publique IMPU, à l'identité privée IMPI, et au mot de passe PWD.

A ce stade de la description, aucune hypothèse n'est faite concernant la concordance (i.e. similarité) des identités privées IMPI' et IMPI. Autrement dit, la personne cherchant à s'enregistrer auprès du coeur de réseau 1 avec l'identité publique IMPU, via le terminal 6, n'est pas nécessairement l'utilisateur légitime U de l'identité publique IMPU, qui s'est préalablement déclaré auprès du coeur de réseau 1.

On suppose que le terminal 6 envoie au serveur P-CSCF 2 une première requête REG1 d'enregistrement SIP REGISTER.

Conformément à la procédure SIP Digest, cette première requête d'enregistrement REG1 contient l'identité publique IMPU de l'utilisateur U ainsi qu'une adresse de contact du terminal 6. En revanche, elle ne contient pas d'identité privée.

Sur réception de la requête REG1, le serveur P-CSCF 2 sollicite un serveur DNS (Domain Name Server) de noms de domaine pour obtenir l'adresse du serveur I-CSCF du réseau nominal de l'utilisateur associé à l'identité publique IMPU. Dans l'exemple décrit ici, ce serveur I-CSCF est le serveur I-CSCF 3.

Le serveur P-CSCF 2 transmet la requête REG1 au serveur I-CSCF 3 ainsi identifié.

Sur réception de la requête REG1 (étape F10), le serveur I-CSCF 3 met en attente la requête d'enregistrement REG1, et analyse les identités contenues dans cette requête REG1 (étape test F20).

Plus particulièrement, il détecte, au cours de cette analyse, que la requête REG1 contient uniquement une identité publique (à savoir l'identité publique IMPU), mais ne contient pas d'identité privée (réponse non à l'étape test F20).

Le serveur I-CSCF 3 dérive (i.e. génère) alors une identité privée IMPId à partir de l'identité publique IMPU (étape F30). A cet effet, il procède comme décrit dans le document TS 24.229 au paragraphe §5.3.1.2.

Il convient de noter que les étapes F10 et F20 sont identiques à l'étape E30 de l'état de la technique, décrite précédemment en référence à la figure 1.

Le serveur I-CSCF 3 positionne par ailleurs un indicateur booléen noté FLAG à la valeur TRUE (ou vrai ou encore 1) : cet indicateur reflète que l'identité privée IMPId a été générée par le serveur I-CSCF 3 (étape F40).

Bien entendu, aucune limitation n'est attachée au type d'information utilisée pour refléter si l'identité privée IMPId a été ou non dérivée de l'identité publique IMPU par le serveur I-CSCF 3. L'invention ne se limite pas à un indicateur booléen. Ainsi, dans un autre mode de réalisation de l'invention, on peut envisager que le serveur I-CSCF 3 adjoigne à l'identité privée IMPId, un suffixe ou un préfixe déterminé, reflétant si l'identité privée IMPId a été dérivée ou non de l'identité publique par le serveur I-CSCF 3.

Le serveur I-CSCF 3 interroge ensuite le serveur HSS 5 de données d'utilisateurs (étape F50), en lui envoyant une requête de contrôle Diameter UAR, désignée par M1, contenant le couple formé de l'identité publique IMPU reçue dans la requête REG1 et de l'identité privée IMPId dérivée à partir de l'identité publique IMPU par le serveur I-CSCF 3. Cette requête de contrôle M1 est une requête de contrôle d'un droit d'enregistrement de l'utilisateur associé aux identités (IMPU, IMPId) auprès du coeur de réseau 1.

Conformément à l'invention, le serveur I-CSCF 3 insère par ailleurs dans la requête de contrôle M1, avant son envoi vers le serveur HSS 5, l'indicateur FLAG positionné à la valeur TRUE.

Dans le mode de réalisation décrit ici, l'indicateur FLAG est inséré par le serveur I-CSCF 3, dans un champ de la requête M1 de contrôle UAR.

En référence à la figure 5, sur réception de la requête de contrôle M1 (étape G10), le serveur HSS 5 analyse les identités et autres informations présentes dans la requête M1 : cette analyse vise notamment à déterminer si l'identité privée présente dans la requête (désignée par IMPIrx sur la figure 5, IMPIrx étant égale à IMPId dans l'exemple envisagé ici) a été générée ou non par le serveur I-CSCF 3 à l'origine de la requête de contrôle (étape test G20).

A cette fin, il analyse la valeur de l'indicateur FLAG inséré par le serveur I-CSCF 3 dans la requête M1 (étape test G20).

Dans l'exemple envisagé ici, l'indicateur FLAG est positionné à la valeur TRUE (réponse oui à l'étape test G20), autrement dit, le serveur HSS 5 détermine, à partir de cet indicateur, que l'identité privée reçue dans la requête de contrôle M1 a été générée par le serveur I-CSCF 3.

Conformément à l'invention, le serveur HSS 5 effectue alors un contrôle basé uniquement sur l'identité publique IMPU contenue dans la requête M1, ce contrôle visant à déterminer si le terminal 6 utilisant l'identité publique IMPU est autorisé à s'enregistrer auprès du coeur de réseau 1 (et notamment du serveur S-CSCF 4) (étape G30).

Autrement dit, le serveur HSS 5 se limite à vérifier, au cours de ce contrôle, qu'un utilisateur légitime est bien déclaré dans sa mémoire non volatile 15 avec l'identité publique IMPU.

Le cas échéant (réponse oui à l'étape test G40), le terminal 6 est autorisé à s'enregistrer auprès du coeur de réseau 1 avec l'identité publique IMPU (étape G50).

Dans l'exemple envisagé ici, l'identité publique IMPU est bien déclarée dans la mémoire 15 du serveur HSS 5, autrement dit, le serveur HSS 5 détermine au cours de l'étape G50 que le terminal 6 est autorisé à s'enregistrer auprès du coeur de réseau.

En revanche, si l'identité publique IMPU n'est pas déclarée dans la mémoire 15 du serveur HSS 5 (réponse non à l'étape test G40), cela signifie que l'identité publique utilisée par le terminal 6 n'est pas connue du coeur de réseau 1 et il n'est donc pas autorisé à s'enregistrer auprès du coeur de réseau 1 avec l'identité publique IMPU (étape G60).

Le serveur HSS 5 envoie au serveur I-CSCF 3 le résultat du contrôle réalisé à partir de l'identité publique IMPU, dans un message R1 de réponse Diameter UAA (étape G70).

Lorsque le résultat du contrôle est positif, le serveur HSS 5 indique par ailleurs dans la réponse R1 les capacités obligatoires et optionnelles du serveur S-CSCF à sélectionner pour l'enregistrement du terminal 6. L'étape G70 est identique à l'étape E60 de l'état de la technique décrite en référence à la figure 1.

Ainsi, dans l'exemple envisagé ici, le serveur HSS 5 envoie donc au serveur I-CSCF 3 un message R1 de réponse Diameter UAA (Success), l'informant que l'utilisateur associé à l'identité publique IMPU est bien connu du coeur de réseau 1 et a le droit de s'enregistrer avec le terminal 6.

En référence à la figure 4, le serveur I-CSCF 3 reçoit le message de réponse R1 (étape F60) et analyse la réponse du serveur HSS 5 contenue dans le message R1.

Le terminal 6 ayant, dans l'exemple envisagé ici, le droit de s'enregistrer auprès du coeur de réseau 1 avec l'identité publique IMPU (réponse oui à l'étape test F70), le serveur I-CSCF 3 sélectionne un serveur d'enregistrement S-CSCF vers lequel orienter la requête émise par le terminal 6 pour s'enregistrer. Il procède à cette fin de façon connue de l'homme du métier, à partir des capacités indiquées par le serveur HSS 5 dans le message R1.

Si en revanche, le terminal 6 n'est pas en droit de s'enregistrer auprès du coeur de réseau 1 avec l'identité publique IMPU (réponse non à l'étape test F70), le serveur I-CSCF 3 rejette la requête REG1 émise par le terminal 6 (étape F110).

On suppose ici que le serveur I-CSCF 3 sélectionne le serveur d'enregistrement S-CSCF 4 pour procéder à l'enregistrement du terminal 6.

Le serveur I-CSCF 3 transfère alors, vers le serveur S-CSCF 4, la requête REG1 d'enregistrement reçue en provenance du terminal 6 (étape F80).

Le serveur S-CSCF 4 crée un contexte associé à l'utilisateur du terminal 6 et procède à son authentification.

Plus particulièrement, il demande des données permettant une authentification de l'utilisateur associé à l'identité publique IMPU au serveur HSS 5, par l'intermédiaire d'une requête Diameter MAR (Multimedia Authentication Request).

Cette requête MAR contient l'identité publique IMPU contenue dans la requête d'enregistrement REG1.

La requête d'enregistrement REG1 ne contenant pas d'identité privée pour l'utilisateur, le serveur S-CSCF 4 dérive à son tour à partir de l'identité publique IMPU, l'identité privée IMPId, de façon similaire au serveur I-CSCF 3, et insère cette identité privée dans la requête MAR.

Dans le mode de réalisation décrit ici, le serveur S-CSCF 4 positionne par ailleurs un indicateur booléen FLAG' à la valeur TRUE (ou vrai ou encore 1) reflétant que l'identité privée IMPId contenue dans la requête MAR a été générée par lui, et insère cet indicateur dans la requête MAR avant de l'envoyer vers le serveur HSS 5 pour l'interroger.

Dans un autre mode de réalisation, le serveur S-CSCF 4 peut procéder de façon similaire à la figure 1 pour obtenir des données permettant l'authentification de l'utilisateur et ne pas insérer l'indicateur FLAG' dans la requête MAR avant son envoi vers le serveur HSS 5.

Le serveur S-CSCF 4 reçoit, en réponse à cette requête, via un message Diameter MAA (Multimedia Authentication Answer), l'identité privée IMPI et le mot de passe PWD de l'utilisateur U enregistrés lors de sa souscription auprès du serveur HSS et stockés dans la mémoire non volatile 15. Ces informations sont bien entendu chiffrées de sorte à assurer leur confidentialité. Elles sont stockées dans le contexte de l'utilisateur du terminal 6 précédemment créé par le serveur S-CSCF 4.

Le serveur S-CSCF 4 retourne ensuite une réponse SIP négative d'enregistrement (401 Unauthorized) au terminal 6, contenant un défi destiné à permettre au terminal 6 de calculer un résultat d'authentification d'usager, en utilisant son mot de passe.

Le terminal 6 calcule le résultat d'authentification d'usager RES, et envoie une seconde requête REG2 d'enregistrement REGISTER au serveur P-CSCF 2, contenant son identité publique IMPU, une identité privée IMPI' et le résultat d'authentification d'usager RES.

Le serveur P-CSCF relaie la seconde requête REG2 vers le serveur I-CSCF 3.

Sur réception de la requête REG2 (étape F10), le serveur I-CSCF 3 analyse les identités contenues dans la requête REG2 (étape test F20) et détecte ainsi, au cours de cette analyse, que la requête REG2 contient une identité publique IMPU et une identité privée IMPI' (réponse oui à l'étape test F20).

Il positionne alors l'indicateur booléen FLAG à la valeur FALSE (ou faux ou encore 0) : cet indicateur positionné à cette valeur reflète que l'identité privée IMPI' n'a pas été générée par le serveur I-CSCF 3, mais a été reçue dans la requête d'enregistrement provenant du terminal 6 (étape F90).

Le serveur I-CSCF 3 interroge ensuite le serveur HSS 5 de données d'utilisateurs (étape F100), à l'aide d'une requête de contrôle Diameter UAR, désignée par M2, et contenant :
- d'une part, le couple formé de l'identité publique IMPU et de l'identité privée IMPI' reçues dans la requête REG2 par le serveur I-CSCF 3 ; et
- d'autre part, l'indicateur FLAG positionné à la valeur FALSE ;
et ce, afin de déterminer si l'utilisateur associé aux identités (IMPU, IMPI') est autorisé à s'enregistrer auprès du coeur de réseau 1 avec son terminal 6. La requête M2 est donc une requête de contrôle d'un droit d'enregistrement de l'utilisateur au sens de l'invention.

Dans le mode de réalisation décrit ici, comme décrit précédemment, l'indicateur FLAG est inséré par le serveur I-CSCF 3 dans un champ de la requête M2 de contrôle UAR.

Dans un autre mode de réalisation, l'indicateur FLAG n'est positionné à FALSE par le serveur I-CSCF 3 et inséré dans la requête de contrôle M2 que lorsque l'identité privée IMPI' est une identité dérivée à partir de l'identité publique, reçue dans la requête d'enregistrement, et donc dérivée par une entité distincte du serveur I-CSCF 3 n'appartenant pas au coeur de réseau 1.

En référence à la figure 5, sur réception de la requête de contrôle M2 (étape G10), le serveur HSS 5 analyse les identités et autres informations présentes dans la requête M2 pour déterminer si l'identité privée présente dans la requête M2 (IMPIrx est égale à IMPI' sur la figure 5) a été générée ou non par le serveur I-CSCF 3.

A cette fin, il analyse la valeur de l'indicateur FLAG inséré par le serveur I-CSCF 3 dans la requête de contrôle M2 (étape test G20).

Dans l'exemple envisagé ici, l'indicateur FLAG est positionné à la valeur FALSE, autrement dit, le serveur HSS 5 détermine à partir de cet indicateur que l'identité privée IMPI' n'a pas été générée par le serveur I-CSCF 3 mais a été reçue par celui-ci dans la requête d'enregistrement provenant du terminal 6 (réponse non à l'étape test G20).

Conformément à l'invention, le serveur HSS 5 effectue alors un contrôle basé sur le couple formé de l'identité publique IMPU et de l'identité privée IMPI' contenues dans la requête M2, visant à déterminer si le terminal 6 utilisant ces identités a le droit de s'enregistrer auprès du coeur de réseau 1 (et notamment du serveur S-CSCF 4) (étape G80).

Autrement dit, le serveur HSS 5 vérifie au cours de ce contrôle qu'un utilisateur légitime est bien déclaré dans sa mémoire non volatile 15 en association avec le couple formé par l'identité publique IMPU et l'identité privée IMPI', et donc autorisé à s'enregistrer auprès du serveur S-CSCF 4.

Le cas échéant (réponse oui à l'étape test G90), autrement dit si les identités privées IMPI et IMPI' concordent (i.e. sont identiques), le serveur HSS 5 en déduit que le terminal 6 (ou de manière équivalente, l'utilisateur du terminal 6) est autorisé à s'enregistrer auprès du coeur de réseau 1 avec les identités IMPU et IMPI' (étape G50).

En revanche, si le couple (IMPU, IMPI') n'est pas déclaré en tant que tel dans la mémoire 15 du serveur HSS 5 (par exemple, l'identité publique IMPU existe bien dans la mémoire 15 mais n'est pas associée à l'identité privée IMPI', i.e. IMPI'≠IMPI), alors cela signifie que le terminal 6 (ou de façon équivalente l'utilisateur du terminal 6) n'est pas autorisé à s'enregistrer auprès du coeur de réseau 1 (étape G60).

Le serveur HSS 5 envoie le résultat du contrôle réalisé à partir de l'identité publique IMPU et de l'identité privée IMPI' au serveur I-CSCF 3 dans un message R2 de réponse Diameter UAA (étape G70).

Afin de mieux illustrer les avantages procurés par l'invention, on suppose ici que le terminal 6 est détenu par un pirate informatique tentant d'usurper l'identité de l'utilisateur légitime U, et que l'identité privée IMPI' incluse dans la requête REG2 par le terminal 6 est différente de l'identité privée IMPI associée à l'identité publique IMPU au niveau du serveur HSS 5.

Le contrôle effectué par le serveur HSS 5 au cours de l'étape G80 porte alors sur le couple (IMPU, IMPI') et conduit à un résultat négatif, i.e., le couple (IMPU, IMPI') ne correspond pas à un utilisateur légitime autorisé à s'enregistrer auprès du coeur de réseau 1.

Le serveur HSS 5 envoie donc au serveur I-CSCF 3 un message R2 de réponse Diameter UAA (Diameter_Error_Unknown_User), l'informant que l'utilisateur associé au couple (IMPU,IMPI') n'est pas connu et n'a donc pas le droit de s'enregistrer auprès du coeur de réseau 1 et notamment du serveur S-CSCF 4 avec le terminal 6.

En référence à la figure 4, le serveur I-CSCF 3 reçoit le message de réponse R2 (étape F60).

Le terminal 6 n'ayant pas le droit de s'enregistrer auprès du coeur de réseau 1 selon le message de réponse R2, le serveur I-CSCF 3 rejette la seconde requête REG2 d'enregistrement du terminal 6, en lui envoyant par exemple un message SIP 403 Forbidden (étape F110). Préférentiellement, ce message ne contient aucune information permettant à l'utilisateur du terminal 6 de déterminer la cause du rejet de son enregistrement.

Dans le mode de réalisation décrit ici, le serveur I-CSCF 3 envoie également un message au serveur S-CSCF 4 lui demandant de libérer les ressources et le contexte alloués au terminal 6 (étape F120).

Dans un autre mode de réalisation, le serveur I-CSCF 3 n'envoie pas de message de libération des ressources au serveur S-CSCF 4, mais les ressources allouées au terminal 6 sont libérées à l'expiration d'un temporisateur armé suite à l'envoi du message 401 Unauthorized par le serveur S-CSCF au terminal 6.

Ainsi, grâce à l'invention, la seconde requête d'enregistrement REG2 émise par le pirate informatique est bloquée et rejetée dès le serveur I-CSCF 3, qui est situé en amont du serveur d'enregistrement S-CSCF 4 : elle n'est donc pas propagée jusqu'au serveur S-CSCF 4. De cette sorte, non seulement on préserve les ressources du coeur de réseau 1, mais également, on empêche le pirate informatique utilisant le terminal 6 d'accéder à des informations précieuses lui permettant d'usurper l'identité publique IMPU de l'utilisateur légitime U.

Bien entendu, si le serveur HSS 5 détermine au cours de l'étape G90 que l'identité privée IMPI' concorde avec l'identité privée IMPI enregistrée par l'utilisateur U, il envoie un message de réponse positif au serveur I-CSCF 3, qui propage alors la requête d'enregistrement REG2 jusqu'au serveur S-CSCF 4 pour vérification du résultat d'authentification d'usager RES et finalisation de l'enregistrement du terminal 6.

Sur réception de la requête d'enregistrement REG2, le serveur S-CSCF 4 insère l'identité publique IMPU et l'identité privée IMPI' de l'utilisateur reçues dans la requête REG2 dans une requête Diameter MAR destinée au serveur HSS 5.

Par ailleurs, dans le mode de réalisation décrit ici, la requête d'enregistrement REG2 contenant une identité privée de l'utilisateur (à savoir l'identité privée IMPI'), le serveur S-CSCF 4 positionne l'indicateur booléen FLAG' à la valeur FALSE reflétant que l'identité privée IMPI' contenue dans la requête MAR n'a pas été générée par lui mais a été reçue dans la requête d'enregistrement REG2. Il insère cet indicateur dans la requête MAR avant de l'envoyer vers le serveur HSS 5.

Dans un autre mode de réalisation, le serveur S-CSCF 4 envoie uniquement dans la requête MAR l'identité publique IMPU et l'identité privée IMPI' de l'utilisateur reçues dans la requête d'enregistrement REG2.

La finalisation de l'enregistrement du terminal 6 par le serveur S-CSCF 4, à partir de la réponse à la requête MAR reçue du serveur HSS 5, se déroule ensuite conformément à l'état de la technique.

## Revendications

1. Procédé de vérification destiné à être mis en oeuvre dans un coeur (1) de réseau IP multimédia, ledit procédé comprenant :
- une étape (F10) de réception, par un serveur d'interrogation (3) du coeur de réseau, d'une requête d'enregistrement (REG1,REG2) auprès d'un serveur d'enregistrement du coeur de réseau, ladite requête d'enregistrement (REG1,REG2) contenant une identité publique (IMPU) d'un utilisateur, le serveur d'interrogation (3) étant situé en amont du serveur d'enregistrement (4) dans le coeur de réseau ; et
- une étape (F50,F100) d'interrogation, par le serveur d'interrogation (3), d'un serveur (5) de données d'utilisateurs du coeur de réseau, comprenant l'envoi au serveur de données d'utilisateurs (5) d'une requête de contrôle (M1,M2) d'un droit d'enregistrement de l'utilisateur auprès du serveur d'enregistrement (4) du coeur de réseau, cette requête de contrôle contenant l'identité publique (IMPU) de l'utilisateur contenue dans la requête d'enregistrement (REG1,REG2) et une identité privée (IMPId,IMPI') de l'utilisateur ;
ledit procédé de vérification étant **caractérisé en ce qu'**il comprend en outre une étape d'insertion (F50), par le serveur d'interrogation (3), dans la requête de contrôle (M1,M2), avant son envoi au serveur (5) de données d'utilisateurs, d'une information (FLAG) reflétant si l'identité privée (IMPId,IMPI') de l'utilisateur contenue dans la requête de contrôle a été générée par le serveur d'interrogation (3) ou reçue par celui-ci dans la requête d'enregistrement (REG1,REG2).

2. Procédé selon la revendication 1 dans lequel la requête d'enregistrement (REG2) comprend en outre l'identité privée (IMPI') de l'utilisateur et un résultat d'authentification (RES) de l'utilisateur.

3. Procédé selon la revendication 2 dans lequel lorsque le serveur d'interrogation (3) détermine à partir d'une réponse (R2) à la requête de contrôle (M2) reçue du serveur (5) de données d'utilisateurs que l'utilisateur n'est pas autorisé à s'enregistrer, une étape d'envoi (F120) à audit serveur d'enregistrement (4) d'un message de libération des ressources allouées à l'utilisateur.

4. Procédé selon l'une quelconque des revendications 1 à 3 dans lequel ladite information (FLAG) est insérée dans un champ de la requête de contrôle (M1,M2).

5. Procédé selon l'une quelconque des revendications 1 à 4 mis en oeuvre dans le cadre d'une procédure d'authentification de l'utilisateur conforme à une procédure SIP Digest ou HTTP Digest.

6. Procédé selon l'une quelconque des revendications 1 à 5 comprenant en outre :
- une étape de réception, par le serveur d'enregistrement, de la requête d'enregistrement (REG1) contenant l'identité publique (IMPU) de l'utilisateur ;
- une étape d'interrogation du serveur (5) de données d'utilisateurs, par le serveur d'enregistrement (4), comprenant l'envoi au serveur (5) de données d'utilisateurs d'une requête d'obtention de données permettant une authentification de l'utilisateur, cette requête d'obtention contenant l'identité publique (IMPU) de l'utilisateur contenue dans la requête d'enregistrement (REG1) et une identité privée (IMPId,IMPI') de l'utilisateur ; et
- une étape d'insertion par le serveur d'enregistrement (4), dans la requête d'obtention, avant son envoi au serveur (5) de données d'utilisateurs, d'une information (FLAG') reflétant si l'identité privée (IMPId,IMPI') de l'utilisateur contenue dans la requête d'obtention a été générée par le serveur (3) d'enregistrement ou reçue par celui-ci dans la requête d'enregistrement (REG1).

7. Procédé de contrôle destiné à être mis en oeuvre par un serveur (5) de données d'utilisateurs d'un coeur (1) de réseau IP multimédia, comprenant :
- une étape (G10) de réception d'une requête de contrôle (M1,M2) d'un droit d'enregistrement d'un utilisateur auprès d'un serveur (4) d'enregistrement du coeur de réseau, cette requête de contrôle provenant d'un serveur (3) d'interrogation du coeur de réseau situé en amont du serveur (4) d'enregistrement, et contenant :
∘ une identité publique (IMPU) et une identité privée (IMPId, IMPI') de l'utilisateur ; et
∘ une information (FLAG) reflétant si l'identité privée de l'utilisateur contenue dans la requête de contrôle a été générée par le serveur (3) d'interrogation ou reçue par ce dernier dans une requête d'enregistrement de l'utilisateur ;
- si le serveur (5) de données détermine à partir de cette information que l'identité privée (IMPI') de l'utilisateur n'a pas été générée par le serveur (3) d'interrogation, une étape (G90) de contrôle au cours de laquelle il vérifie que le couple formé de l'identité publique (IMPU) et de l'identité privée (IMPI') contenues dans la requête de contrôle (M2) correspond à un utilisateur autorisé à s'enregistrer ;
- sinon, une étape (G40) de contrôle au cours de laquelle il vérifie que l'identité publique (IMPU) contenue dans la requête de contrôle (M1) correspond à un utilisateur autorisé à s'enregistrer.

8. Programme d'ordinateur comportant des instructions pour l'exécution des étapes du procédé de vérification selon l'une quelconque des revendications 1 à 5 lorsque ledit programme est exécuté par un ordinateur.

9. Programme d'ordinateur comportant des instructions pour l'exécution des étapes du procédé de contrôle selon la revendication 7 lorsque ledit programme est exécuté par un ordinateur.

10. Support d'enregistrement lisible par un ordinateur sur lequel est enregistré un programme d'ordinateur comprenant des instructions pour l'exécution des étapes du procédé de vérification selon l'une quelconque des revendications 1 à 5 ou du procédé de contrôle selon la revendication 7.

11. Serveur (3) d'interrogation d'un coeur (1) de réseau IP multimédia, comprenant :
- des moyens (11) de réception d'une requête (REG1,REG2) d'enregistrement auprès d'un serveur d'enregistrement du coeur de réseau, contenant une identité publique (IMPU) d'un utilisateur ;
- des moyens (11,7) d'interrogation d'un serveur (5) de données d'utilisateurs du coeur de réseau, comprenant des moyens d'envoi au serveur (5) de données d'utilisateurs, d'une requête de contrôle (R1,R2) d'un droit d'enregistrement de l'utilisateur auprès du serveur d'enregistrement du coeur de réseau, cette requête de contrôle contenant l'identité publique (IMPU) de l'utilisateur contenue dans la requête d'enregistrement (REG1,REG2) et une identité privée (IMPId,IMPI') de l'utilisateur ;
ledit serveur d'interrogation (3) étant situé en amont du serveur (4) d'enregistrement dans le coeur de réseau et étant **caractérisé en ce qu'**il comprend en outre des moyens d'insertion, dans la requête de contrôle (M1,M2) avant son envoi au serveur (5) de données, d'une information (FLAG) reflétant si l'identité privée (IMPId,IMPI') de l'utilisateur contenue dans la requête de contrôle (M1,M2) a été générée par le serveur d'interrogation ou reçue par celui-ci dans la requête d'enregistrement.

12. Serveur (5) de données d'utilisateurs d'un coeur (1) de réseau IP multimédia comprenant :
- des moyens (16) de réception d'une requête (M1,M2) de contrôle d'un droit d'enregistrement d'un utilisateur auprès d'un serveur (4) d'enregistrement du coeur de réseau, cette requête de contrôle provenant d'un serveur (3) d'interrogation du coeur de réseau situé en amont du serveur d'enregistrement, et contenant :
∘ une identité publique (IMPU) et une identité privée (IMPId, IMPI') de l'utilisateur ; et
∘ une information (FLAG) reflétant si l'identité privée de l'utilisateur contenue dans la requête de contrôle a été générée par le serveur d'interrogation ou reçue par ce dernier dans une requête d'enregistrement de l'utilisateur ;
- des moyens (12) de contrôle configurés :
∘ pour vérifier que le couple formé de l'identité publique (IMPU) et de l'identité privée (IMPI') contenues dans la requête de contrôle (M2) correspond à un utilisateur autorisé à s'enregistrer, si les moyens de contrôle déterminent à partir de l'information (FLAG) contenue dans la requête de contrôle que l'identité privée (IMPI') de l'utilisateur n'a pas été générée par le serveur (3) d'interrogation ; et
∘ pour vérifier que l'identité publique (IMPU) contenue dans la requête de contrôle (M1) correspond à un utilisateur autorisé à s'enregistrer, sinon.

13. Coeur (1) de réseau IP multimédia comprenant :
- un serveur (3) d'interrogation selon la revendication 11 ; et
- un serveur (5) de données d'utilisateurs selon la revendication 12.

14. Coeur (1) de réseau IP multimédia selon la revendication 13 comprenant en outre un serveur (4) d'enregistrement comprenant :
- des moyens de réception de la requête d'enregistrement (REG1) contenant l'identité publique (IMPU) de l'utilisateur ;
- des moyens d'interrogation du serveur (5) de données d'utilisateurs, comprenant des moyens d'envoi au serveur (5) de données d'utilisateurs d'une requête d'obtention de données permettant une authentification de l'utilisateur, cette requête d'obtention contenant l'identité publique (IMPU) de l'utilisateur contenue dans la requête d'enregistrement (REG1) et une identité privée (IMPId,IMPI') de l'utilisateur ; et
- des moyens d'insertion dans la requête d'obtention, avant son envoi au serveur (5) de données d'utilisateurs, d'une information (FLAG') reflétant si l'identité privée (IMPId,IMPI') de l'utilisateur contenue dans la requête d'obtention a été générée par le serveur (3) d'enregistrement ou reçue par celui-ci dans la requête d'enregistrement (REG1).

15. Coeur (1) de réseau IP multimédia selon la revendication 13 ou 14 mettant en oeuvre une architecture IMS et dans lequel :
- le serveur (3) d'interrogation est un serveur I-CSCF ;
- le serveur (5) de données d'utilisateurs est un serveur HSS ; et
- le serveur (4) d'enregistrement est un serveur S-CSCF.

## Patentansprüche

1. Verifizierungsverfahren, das dazu bestimmt ist, in einem Multimedia-IP-Netzwerkkern (1) umgesetzt zu werden, wobei das Verfahren aufweist:
- einen Schritt (F10) des Empfangens durch einen Abfrageserver (3) des Netzwerkkerns einer Registrierungsanfrage (REG1, REG2) bei einem Registrierungsserver des Netzwerkkerns, wobei die Registrierungsanfrage (REG1, REG2) eine öffentliche Identität (IMPU) eines Benutzers enthält, wobei der Abfrageserver (3) vorgelagert vor dem Registrierungsserver (4) im Netzwerkkern angeordnet ist, und
- einen Schritt (F50, F100) des Abfragens durch den Abfrageserver (3) eines Benutzerdaten-Servers (5) des Netzwerkkerns, umfassend das Senden an den Benutzerdaten-Server (5) einer Prüfanfrage (M1, M2) eines Registrierungsrechts des Benutzers bei dem Registrierungsserver (4) des Netzwerkkerns, wobei diese Prüfanfrage die öffentliche Identität (IMPU) des Benutzers, die in der Registrierungsanfrage (REG1, REG2) enthalten ist, und eine private Identität (IMPid, IMPI') des Benutzers enthält,
wobei das Verifizierungsverfahren **dadurch gekennzeichnet ist, dass** es ferner einen Schritt des Eingebens (F50) durch den Abfrageserver (3) in die Prüfanfrage (M1, M2) vor ihrem Senden an den Benutzerdaten-Server (5) von einer Information (FLAG) aufweist, die widerspiegelt, ob die private Identität (IMPId, IMPI') des Benutzers, die in der Prüfanfrage enthalten ist, durch den Abfrageserver (3) generiert oder von diesem in der Registrierungsanfrage (REG1, REG2) empfangen worden ist.

2. Verfahren nach Anspruch 1, wobei die Registrierungsanfrage (REG2) ferner eine private Identität (IMPI') des Benutzers und ein Ergebnis der Authentifizierung (RES) des Benutzers enthält.

3. Verfahren nach Anspruch 2, wobei, wenn der Abfrageserver (3) ausgehend von einer Antwort (R2) auf die Prüfanfrage (M2), die von dem Benutzerdaten-Server (5) empfangen wird, bestimmt, dass der Benutzer nicht berechtigt ist, sich zu registrieren, einen Schritt des Sendens (F120) an den Registrierungsserver (4) einer Nachricht des Freigebens der Ressourcen, die dem Benutzer zugewiesen werden.

4. Verfahren nach einem der Ansprüche 1 bis 3, wobei die Information (FLAG) in ein Feld der Prüfanfrage (M1, M2) eingegeben wird.

5. Verfahren nach einem der Ansprüche 1 bis 4, das im Rahmen eines Authentifizierungsverfahrens des Benutzers gemäß einem SIP-Digest- oder HTTP-Digest-Verfahren umgesetzt wird.

6. Verfahren nach einem der Ansprüche 1 bis 5, ferner umfassend:
- einen Schritt des Empfangens durch den Registrierungsserver der Registrierungsanfrage (REG1), die die öffentliche Identität (IMPU) des Benutzers enthält,
- einen Schritt des Abfragens des Benutzerdaten-Servers (5) durch den Registrierungsserver (4), umfassend das Senden an den Benutzerdaten-Server (5) einer Anfrage zum Erhalten von Daten, die eine Authentifizierung des Benutzers ermöglichen, wobei diese Anfrage zum Erhalten die öffentliche Identität (IMPU) des Benutzers, die in der Registrierungsanfrage (REG1) enthalten ist, und eine private Identität (IMPId, IMPI') des Benutzers enthält, und
- einen Schritt des Eingebens durch den Registrierungsserver (4) in die Anfrage zum Erhalten vor ihrem Senden an den Benutzerdaten-Server (5) von einer Information (FLAG') aufweist, die widerspiegelt, ob die private Identität (IMPId, IMPI') des Benutzers, die in der Anfrage zum Erhalten enthalten ist, durch den Registrierungsserver (3) generiert oder von diesem in der Registrierungsanfrage (REG1) empfangen worden ist.

7. Prüfverfahren, das dazu bestimmt ist, von einem Benutzerdaten-Server (5) eines Multimedia-IP-Netzwerkkerns (1) umgesetzt zu werden , umfassend:
- einen Schritt (G10) des Empfangens einer Prüfanfrage (M1, M2) eines Registrierungsrechts eines Benutzers bei einem Registrierungsserver (4) des Netzwerkkerns, wobei diese Prüfanfrage von einem Abfrageserver (3) des Netzwerkkerns kommt, der vorgelagert vor dem Registrierungsserver (4) angeordnet ist, und enthält:
o eine öffentliche Identität (IMPU) und eine private Identität (IMPId, IMPI') des Benutzers und
∘ eine Information (FLAG), die widerspiegelt, ob die private Identität des Benutzers, die in der Prüfanfrage enthalten ist, durch den Abfrageserver (3) generiert oder von diesem Letzteren in einer Registrierungsanfrage des Benutzers empfangen worden ist;
- wenn der Benutzerdaten-Server (5) ausgehend von dieser Information bestimmt, dass die private Identität (IMPI') des Benutzers nicht von dem Abfrageserver (3) generiert worden ist, einen Prüfschritt (G90), bei dem er verifiziert, dass das Paar, das aus der öffentlichen Identität (IMPU) und der privaten Identität (IMPI') gebildet wird, die in der Prüfanfrage (M2) enthalten sind, einem Benutzer entspricht, der berechtigt ist, sich zu registrieren,
- anderenfalls einen Prüfschritt (G40), bei dem er verifiziert, dass die öffentliche Identität (IMPU), die in der Prüfanfrage (M1) enthalten ist, einem Benutzer entsprechen, der berechtigt ist, sich zu registrieren.

8. Computerprogramm, das Anweisungen für die Ausführung der Schritte des Verifizierungsverfahrens nach einem der Ansprüche 1 bis 5 aufweist, wenn das Programm von einem Computer ausgeführt wird.

9. Computerprogramm, das Anweisungen für die Ausführung der Schritte des Prüfverfahrens nach Anspruch 7 aufweist, wenn das Programm von einem Computer ausgeführt wird.

10. Computerlesbares Aufzeichnungsmedium, auf dem ein Computerprogramm aufgezeichnet ist, das Anweisungen für die Ausführung der Schritte des Verifizierungsverfahrens nach einem der Ansprüche 1 bis 5 oder des Prüfverfahrens nach Anspruch 7 aufweist.

11. Abfrageserver (3) eines Multimedia-IP-Netzwerkkerns (1), umfassend:
- Mittel (11) zum Empfangen einer Registrierungsanfrage (REG1, REG2) bei einem Registrierungsserver des Netzwerkkerns, die eine öffentliche Identität (IMPU) eines Benutzers enthält,
- Mittel (11, 7) zum Abfragen eines Benutzerdaten-Servers (5) des Netzwerkkerns, umfassend Mittel zum Senden an den Benutzerdaten-Server (5) einer Prüfanfrage (R1, R2) eines Registrierungsrechts des Benutzers bei dem Registrierungsserver des Netzwerkkerns, wobei diese Prüfanfrage die öffentliche Identität (IMPU) des Benutzers, die in der Registrierungsanfrage (REG1, REG2) enthalten ist, und eine private Identität (IMPId, IMPI') des Benutzers enthält,
wobei der Abfrageserver (3) vorgelagert vor dem Registrierungsserver (4) in dem Netzwerkkern angeordnet ist und **dadurch gekennzeichnet ist, dass** er ferner Mittel zum Eingeben in die Prüfanfrage (M1, M2) vor ihrem Senden an den Benutzerdaten-Server (5) von einer Information (FLAG) aufweist, die widerspiegelt, ob die private Identität (IMPId, IMPI') des Benutzers, die in der Prüfanfrage (M1,M2) enthalten ist, durch den Abfrageserver generiert oder von diesem in der Registrierungsanfrage empfangen worden ist.

12. Benutzerdaten-Server (5) eines Multimedia-IP-Netzwerkkerns (1), umfassend:
- Mittel (16) zum Empfangen einer Prüfanfrage (M1, M2) eines Registrierungsrechts eines Benutzers bei einem Registrierungsserver (4) des Netzwerkkerns, wobei diese Prüfanfrage von einem Abfrageserver (3) des Netzwerkkerns kommt, der vorgelagert vor dem Registrierungsserver angeordnet ist, und enthält:
∘ eine öffentliche Identität (IMPU) und eine private Identität (IMPId, IMPI') des Benutzers und
∘ eine Information (FLAG), die widerspiegelt, ob die private Identität des Benutzers, die in der Prüfanfrage enthalten ist, durch den Abfrageserver generiert oder von diesem Letzteren in einer Registrierungsanfrage des Benutzers empfangen worden ist;
- Prüfmittel (12), die konfiguriert sind:
∘ um zu verifizieren, dass das Paar, das aus der öffentlichen Identität (IMPU) und der privaten Identität (IMPI') gebildet ist, die in der Prüfanfrage (M2) enthalten sind, einem Benutzer entsprechen, der berechtigt ist, sich zu registrieren, wenn die Prüfmittel ausgehend von der Information (FLAG), die in der Prüfanfrage enthalten ist, bestimmen, dass die private Identität (IMPI') nicht von dem Abfrageserver (3) generiert worden ist, und
∘ um zu verifizieren, dass die öffentliche Identität (IMPU), die in der Prüfanfrage (M1) enthalten ist, einem Benutzer entspricht, der berechtigt ist, sich zu registrieren, anderenfalls.

13. Multimedia-IP-Netzwerkkerns (1), umfassend:
- einen Abfrageserver (3) nach Anspruch 11 und
- einen Benutzerdaten-Server (5) nach Anspruch 12.

14. Multimedia-IP-Netzwerkkerns (1) nach Anspruch 13, ferner umfassend einen Registrierungsserver (4), umfassend:
- Mittel zum Empfangen der Registrierungsanfrage (REG1), die die öffentliche Identität (IMPU) des Benutzers enthält,
- Mittel zum Abfragen des Benutzerdaten-Servers (5), umfassend Mittel zum Senden an den Benutzerdaten-Server (5) einer Anfrage zum Erhalten von Daten, die eine Authentifizierung des Benutzers ermöglichen, wobei diese Anfrage zum Erhalten die öffentliche Identität (IMPU) des Benutzers, die in der Registrierungsanfrage (REG1) enthalten ist, und eine private Identität (IMPId, IMPI') des Benutzers enthält, und
- Mittel zum Eingeben in die Anfrage zum Erhalten vor ihrem Senden an den Benutzerdaten-Server (5) von einer Information (FLAG'), die widerspiegelt, ob die private Identität (IMPId, IMPI') des Benutzers, die in der Anfrage zum Erhalten enthalten ist, durch den Registrierungsserver (3) generiert oder von diesem in der Registrierungsanfrage (REG1) empfangen worden ist.

15. Multimedia-IP-Netzwerkkern (1) nach Anspruch 13 oder 14, der eine IMS-Architektur umsetzt, und wobei:
- der Abfrageserver (3) ein I-CSCF-Server ist,
- der Benutzerdaten-Server (5) ein HHS-Server ist, und
- der Registrierungsserver(4) ein S-CSCF-Server ist.

## Claims

1. Verification method intended to be implemented in a multimedia IP network core (1), said method comprising:
- a step (F10) of reception, by an interrogation server (3) of the network core, of a request for registration (REG1,REG2) with a registration server of the network core, said registration request (REG1,REG2) containing a public identity (IMPU) of a user, the interrogation server (3) being situated upstream of the registration server (4) in the network core; and
- a step (F50,F100) of interrogation, by the interrogation server (3), of a users' data server (5) of the network core, comprising the dispatching to the users' data server (5) of a control request (M1,M2) in respect of a right of registration of the user with the registration server (4) of the network core, this control request containing the user's public identity (IMPU) contained in the registration request (REG1,REG2) and a private identity (IMPId,IMPI') of the user;
said verification method being **characterized in that** it furthermore comprises a step of insertion (F50), by the interrogation server (3), into the control request (M1,M2), before its dispatching to the users' data server (5), of an information item (FLAG) reflecting whether the user's private identity (IMPId,IMPI') contained in the control request has been generated by the interrogation server (3) or received by the latter in the registration request (REG1,REG2).

2. Method according to Claim 1, in which the registration request (REG2) furthermore comprises the private identity (IMPI') of the user and an authentication result (RES) of the user.

3. Method according to Claim 2, in which when the interrogation server (3) determines, on the basis of a response (R2) to the control request (M2) received from the users' data server (5) that the user is not authorized to register, a step of dispatching (F120) to said registration server (4) of a message for releasing the resources allocated to the user.

4. Method according to any one of Claims 1 to 3, in which said information item (FLAG) is inserted into a field of the control request (M1,M2).

5. Method according to any one of Claims 1 to 4, implemented within the framework of a procedure for authenticating the user in accordance with an SIP Digest or HTTP Digest procedure.

6. Method according to any one of Claims 1 to 5, furthermore comprising:
- a step of reception, by the registration server, of the registration request (REG1) containing the public identity (IMPU) of the user;
- a step of interrogation of the users' data server (5), by the registration server (4), comprising the dispatching to the users' data server (5) of a request for obtaining data allowing an authentication of the user, this obtaining request containing the user's public identity (IMPU) contained in the registration request (REG1) and a private identity (IMPM,IMPI') of the user; and
- a step of insertion by the registration server (4), into the obtaining request, before its dispatching to the users' data server (5), of an information item (FLAG') reflecting whether the user's private identity (IMPId,IMPI') contained in the obtaining request has been generated by the registration server (3) or received by the latter in the registration request (REG1).

7. Control method intended to be implemented by a users' data server (5) of a multimedia IP network core (1), comprising:
- a step (G10) of receiving a control request (M1,M2) in respect of a right of registration of a user with a registration server (4) of the network core, this control request originating from an interrogation server (3) of the network core situated upstream of the registration server (4), and containing:
∘ a public identity (IMPU) and a private identity (IMPId, IMPI') of the user; and
∘ an information item (FLAG) reflecting whether the user's private identity contained in the control request has been generated by the interrogation server (3) or received by the latter in a request for registration of the user;
- if the data server (5) determines on the basis of this information item that the private identity (IMPI') of the user has not been generated by the interrogation server (3), a step (G90) of control in the course of which it verifies that the pair formed of the public identity (IMPU) and the private identity (IMPI') which are contained in the control request (M2) corresponds to a user authorized to register;
- otherwise, a step (G40) of control in the course of which it verifies that the public identity (IMPU) contained in the control request (M1) corresponds to a user authorized to register.

8. Computer program comprising instructions for the execution of the steps of the verification method according to any one of Claims 1 to 5 when said program is executed by a computer.

9. Computer program comprising instructions for the execution of the steps of the control method according to Claim 7 when said program is executed by a computer.

10. Recording medium readable by a computer on which is recorded a computer program comprising instructions for the execution of the steps of the verification method according to any one of Claims 1 to 5 or of the control method according to Claim 7.

11. Interrogation server (3) of a multimedia IP network core (1), comprising:
- means (11) for receiving a request (REG1,REG2) for registration with a registration server of the network core, containing a public identity (IMPU) of a user;
- means (11,7) for interrogating a users' data server (5) of the network core, comprising means for dispatching to the users' data server (5) a control request (R1,R2) in respect of a right of registration of the user with the registration server of the network core, this control request containing the user's public identity (IMPU) contained in the registration request (REG1,REG2) and a private identity (IMPId,IMPI') of the user;
said interrogation server (3) being situated upstream of the registration server (4) in the network core and being **characterized in that** it furthermore comprises means for inserting, into the control request (M1,M2) before its dispatching to the data server (5), an information item (FLAG) reflecting whether the user's private identity (IMPId,IMPI') contained in the control request (M1,M2) has been generated by the interrogation server or received by the latter in the registration request.

12. Users' data server (5) of a multimedia IP network core (1) comprising:
- means (16) for receiving a request (M1,M2) for control of a right of registration of a user with a registration server (4) of the network core, this control request originating from an interrogation server (3) of the network core situated upstream of the registration server, and containing:
∘ a public identity (IMPU) and a private identity (IMPId, IMPI') of the user; and
∘ an information item (FLAG) reflecting whether the user's private identity contained in the control request has been generated by the interrogation server or received by the latter in a request for registration of the user;
- control means (12) configured:
∘ to verify that the pair formed of the public identity (IMPU) and the private identity (IMPI') which are contained in the control request (M2) corresponds to a user authorized to register, if the control means determine on the basis of the information item (FLAG) contained in the control request that the private identity (IMPI') of the user has not been generated by the interrogation server (3); and
∘ to verify that the public identity (IMPU) contained in the control request (Ml) corresponds to a user authorized to register, otherwise.

13. Multimedia IP network core (1) comprising:
- an interrogation server (3) according to Claim 11; and
- a users' data server (5) according to Claim 12.

14. Multimedia IP network core (1) according to Claim 13, furthermore comprising a registration server (4) comprising:
- means for receiving the registration request (REG1) containing the public identity (IMPU) of the user;
- means for interrogating the users' data server (5), comprising means for dispatching to the users' data server (5) a request for obtaining data allowing an authentication of the user, this obtaining request containing the user's public identity (IMPU) contained in the registration request (REG1) and a private identity (IMPId,IMPI') of the user; and
- means for inserting into the obtaining request, before its dispatching to the users' data server (5), an information item (FLAG') reflecting whether the user's private identity (IMPId,IMPI') contained in the obtaining request has been generated by the registration server (3) or received by the latter in the registration request (REG1).

15. Multimedia IP network core (1) according to Claim 13 or 14, implementing an IMS architecture and in which:
- the interrogation server (3) is an I-CSCF server;
- the users' data server (5) is an HSS server; and
- the registration server (4) is an S-CSCF server.
